# EUROPÄISCHE PATENTSCHRIFT

(11) **EP 0 764 694 B1**
(45) Veröffentlichungstag und Bekanntmachung des Hinweises auf die Patenterteilung: **07.11.2001**
(21) Anmeldenummer: 96810607.0
(22) Anmeldetag: 12.09.1996
(51) Int. Cl.: C09B 62/04, C09B 62/507, C09B 62/47, C09B 62/006

(54) **Reaktivfarbstoffe, ihre Herstellung und Verwendung**
Reactive dyes, their preparation and use thereof
Colorants réactifs, leur préparation et utilisation

(30) Priorität: 21.09.1995 CH 267595
(43) Veröffentlichungstag der Anmeldung: 26.03.1997
(73) Patentinhaber: Ciba Specialty Chemicals Holding Inc., 4057 Basel (CH)
(72) Erfinder: Deitz, Rolf, 79400 Kandern (DE); Müller, Bernhard, 79588 Efringen-Kirchen (DE); Tzikas, Athanassios, 4133 Pratteln (DE)

(56) Entgegenhaltungen:
- EP-A- 0 258 806
- EP-A- 0 623 655
- EP-A- 0 626 429
- GB-A- 2 007 698

## Beschreibung

Die vorliegende Erfindung betrifft neue Reaktivfarbstoffe, Verfahren zu ihrer Herstellung und ihre Verwendung zum Färben oder Bedrucken von textilen Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind
(a) Verbindungen der Formel 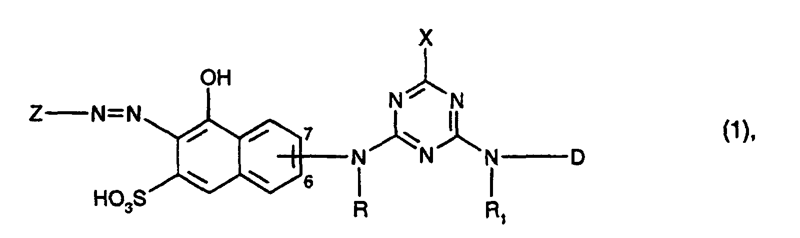 worin
   R gegebenenfalls substituiertes C₁-C₄-Alkyl bedeutet,
   R₁ Wasserstoff ist,
   X für Halogen steht,
   Z durch einen oder mehrere gleiche oder verschiedene Substituenten aus der Gruppe Sulfo, C₁-C₄-Alkyl, C₁-C₄-Alkoxy und Reaktivrest der Formel

      -SO₂-Y (2a),

      -CONH-(CH₂)ₙ-SO₂-Y (2b)

      oder

      -NH-CO-Y₁ (2d)

      substituiertes Phenyl bedeutet, worin
   Y Vinyl, β-Chlorethyl, β-Sulfatoethyl, β-Thiosulfatoethyl, β-Acetoxyethyl, β-Phenoxyethyl oder β-Phosphatoethyl,
   Y₁ eine Gruppe -CHX₁-CH₂X₁ oder -CX₁=CH₂ und X₁ Brom oder Chlor, und
   n eine ganze Zahl von 1 bis 6 sind, oder
   Z durch Sulfo oder einen Reaktivrest der oben angegebenen Formel (2a) substituiertes 1-oder 2-Naphthyl ist;
   und D einen Rest der Formel 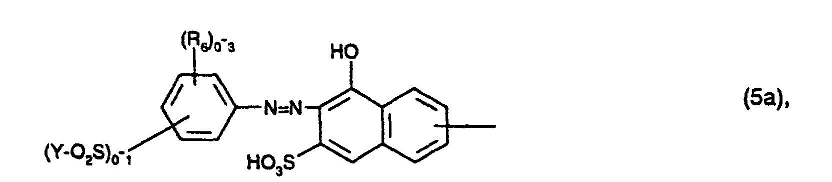 worin (R₆)₀₋₃ für 0 bis 3 gleiche oder verschiedene Substituenten aus der Gruppe C₁-C₄-Alkyl, C₁-C₄-Alkoxy, Halogen, Carboxy und Sulfo steht und Y die oben angegebene Bedeutung hat; 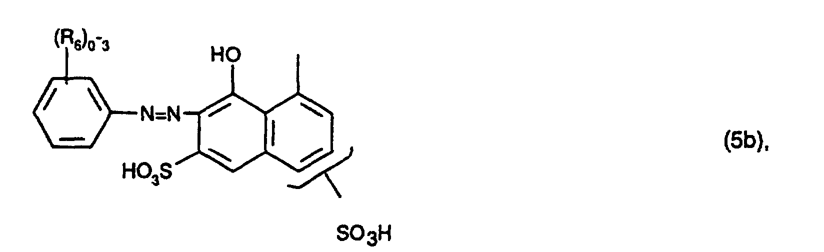 worin (R₆)₀₋₃ die zuvor angegebene Bedeutung hat oder ein Rest der Formel -SO₂-Y ist, wobei für Y die zuvor angegebenen Bedeutungen gelten; 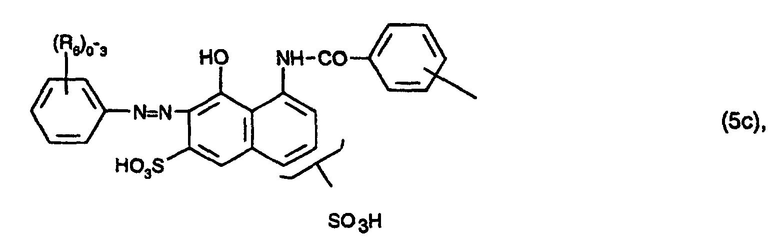 worin (R₆)₀₋₃ die zuvor angegebene Bedeutung hat, 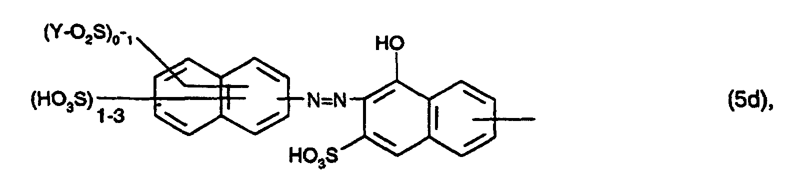 worin Y die zuvor angegebene Bedeutung hat; 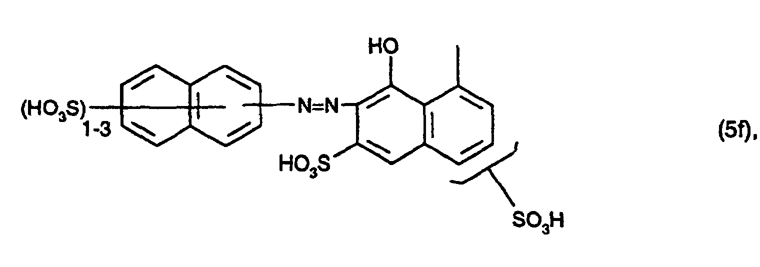 oder 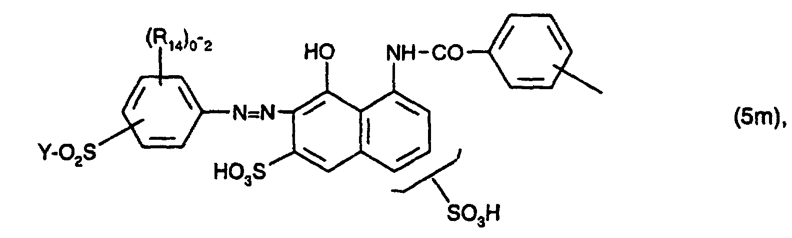 worin
   (R₁₄)₀₋₂ für 0 bis 2 gleiche oder verschiedene Substituenten aus der Gruppe C₁-C₄-Alkyl, C₁-C₄-Alkoxy, Halogen, Carboxy und Sulfo steht; und Y die oben angegebene Bedeutung hat; bedeutet, mit der Massgabe, dass mindestens einer der Reste D und Z einen faserreaktiven Rest -SO₂-Y oder -NHCO-Y₁ trägt, worin Y und Y₁ die oben genannten Bedeutungen haben; und
(b) Verbindungen der Formel (1), worin
   R gegebenenfalls substituiertes C₁-C₄-Alkyl bedeutet,
   R₁ Wasserstoff ist,
   X für Halogen steht,
   Z ein Rest der Formel 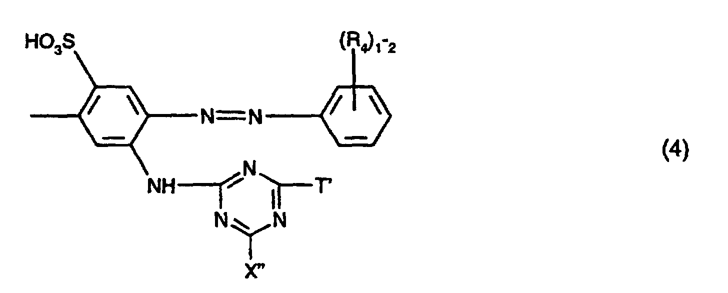 ist, worin
   T einen nicht-reaktiven Aminorest bedeutet,
   X" unabhängig die für X angegebene Bedeutung hat, und
   (R₄)₁₋₂ für 1 bis 2 gleiche oder verschiedene Reste R₄ aus der Gruppe Methyl, Methoxy, Sulfo und Reaktivrest der Formel

      -SO₂-Y (2a),

      -CONH-(CH₂)ₙ-SO₂-Y (2b)

      oder

      -NH-CO-Y₁ (2d)

      steht, worin
   Y Vinyl, β-Chlorethyl, β-Sulfatoethyl, β-Thiosulfatoethyl, β-Acetoxyethyl, β-Phenoxyethyl oder β-Phosphatoethyl,
   Y₁ eine Gruppe -CHX₁-CH₂X₁ oder -CX₁=CH₂ und X₁ Brom oder Chlor, und
   n eine ganze Zahl von 1 bis 6 sind, und
   D der Rest eines Monoazo-, Polyazo-, Metallkomplexazo-, Anthrachinon-, Phthalocyanin-, Formazan- oder Dioxazin-Chromophors bedeutet,
mit den Massgaben, dass (i) mindestens einer der Reste D und Z einen faserreaktiven Rest -SO₂-Y oder -NHCO-Y₁ trägt, worin Y und Y₁ die oben angegebenen Bedeutungen haben, und dass (ii) der Rest -NR₁- nicht an einen durch -NH₂ substituierten Phenylenrest gebunden ist, wenn D für den Rest eines Monoazo- oder Disazochromophors steht.

Die in der EP-A-0 258 806 offenbarten Reaktivfarbstoffe enthalten zwei Monoazofarbstoffreste, die über eine Pyridiniumtriazingruppe miteinander verbrückt sind, wobei die Bindung zwischen dem Triazin-Brückenglied und den beiden Farbstoffresten entweder über Amino- oder Methylaminogruppen erfolgt.

In der EP-A-0 626 429 werden triazinverbrückte Farbstoffe offenbart, die einen Monoazofarbstoffrest mit einer l-Säure-Kupplungskomponente und einen Disazofarbstoffrest mit einer H-Säure-Kupplungskomponente aufweisen, wobei die Bindung zwischen dem Triazin-Brückenglied und den beiden Farbstoffresten über Aminogruppen erfolgt.

Die triazinverbrückten Reaktivfarbstoffe, die in der GB-A-2 007 698 offenbart werden, enthalten zwei Monoazofarbstoffreste, die ausschliesslich über Aminogruppen mit dem Triazinrest verbunden sind.

Der Rest -NR- kann in 7-Stellung oder vorzugsweise in 6-Stellung an den Hydroxynaphthalinsulfonsäurerest gebunden sein.

Bedeutet R gegebenenfalls substituiertes C₁-C₄-Alkyl, kann es sich z.B. um unsubstituiertes oder z.B. durch Hydroxy, Sulfo, Sulfato, Carboxy, Cyano, Halogen, C₁-C₄-Alkoxycarbonyl oder Carbamoyl substituiertes Methyl, Ethyl, n- oder iso-Propyl oder n-, sec.-, tert.- oder iso-Butyl handeln.

R bedeutet bevorzugt unsubstituiertes C₁-C₄-Alkyl, besonders bevorzugt Methyl oder Ethyl und insbesondere bevorzugt Methyl.

X bedeutet Halogen, z.B. Fluor, Chlor oder Brom und bevorzugt Fluor oder Chlor.

Geeignete Substituenten am Rest Z als substituiertes Phenyl sind Sulfo; C₁-C₄-Alkyl, besonders Methyl; C₁-C₄-Alkoxy, besonders Methoxy; oder ein faserreaktiver Rest der Formel

-SO₂-Y (2a),

-CONH-(CH₂)ₙ-SO₂-Y (2b)

oder

-NH-CO-Y₁ (2d),

worin Y und Y₁ jeweils die zuvor angegebene Bedeutung haben und n eine ganze Zahl von 1 bis 6 bedeutet.

Y bedeutet bevorzugt β-Sulfatoethyl oder Vinyl.

Y₁ bedeutet eine Gruppe -CHX₁-CH₂X₁ oder -CX₁=CH₂, worin X₁ Chlor oder vorzugsweise Brom ist.

n steht bevorzugt für die Zahl 2, 3 oder 4, besonders bevorzugt für die Zahl 2 oder 3 und insbesondere bevorzugt für die Zahl 2.

Bei T' als nicht-reaktivem Aminorest kann es sich z.B. um Amino; N-C₁-C₄-Alkylamino oder N,N-Di-C₁-C₄-Alkylamino, wobei das Alkyl jeweils z.B. durch Sulfo, Sulfato, Hydroxy, Carboxy oder Phenyl substituiert sein kann; Cydohexylamino; Phenylamino oder Naphthylamino, wobei das Phenyl oder Naphthyl jeweils z.B. durch C₁-C₄-Alkyl, C₁-C₄-Alkoxy, Amino, C₂-C₄-Alkanoylamino, Carboxy, Sulfo oder Halogen substituiert sein kann; N-C₁-C₄-Alkyl-N-phenylamino, wobei das Alkyl und Phenyl gegebenenfalls wie zuvor geschildert substituiert sein kann, oder um Morpholino handeln.

Beispiele für geeignete nicht-reaktive Aminoreste T' sind Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, 2- oder 3-Sulfo-4-methoxyphenylamino, 2-oder 3-Sulfo-4-methylphenylamino, 4-Methyl-2,5-disulfophenylamino, o-Carboxyphenylamino, 1- oder 2-Naphthylamino, 1-Sulfo-2-naphthylamino, 1,5-Disulfo-2-naphthylamino, 6,8-Disulfo-2-naphthylamino, 4,8-Disulfo-2-naphthylamino, 4,6,8-Trisulfo-2-naphthylamino, 1,5,7-Trisulfo-2-naphthylamino, 3,6,8-Trisulfo-2-naphthylamino, 1,6-Disulfo-2-naphthylamino, N-Ethyl-N-phenylamino, N-Methyl-N-phenylamino, N-β-sulfoethyl-N-phenylamino, β-Hydroxyethyl-N-phenylamino und Morpholino.

T' steht bevorzugt für Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino, N-C₁-C₂-Alkyl-N-phenylamino oder für Morpholino und besonders bevorzugt für Amino, unsubstituiertes oder durch Sulfo substituiertes N-Mono- oder N,N-Di-C₁-C₂-Alkylamino, durch 1 bis 3 gleiche Reste aus der Gruppe Methyl, Methoxy und Sulfo substituiertes Phenylamino oder für 1 bis 3 Sulfogruppen tragendes 1- oder 2-Naphthylamino.

Z bedeutet bevorzugt unsubstituiertes oder durch Sulfo, Methyl, Methoxy oder einen Reaktivrest der zuvor angegebenen Formel (2a) substituiertes Phenyl oder durch 1 bis 3 Sulfogruppen substituiertes 2-Naphthyl.

Z bedeutet besonders bevorzugt einen Rest der Formel 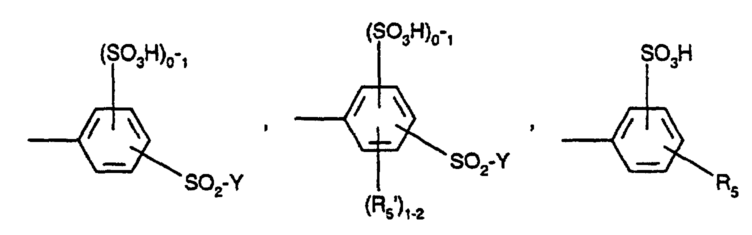 oder 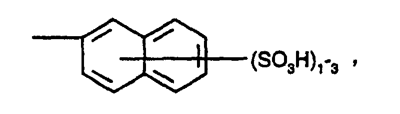 worin R₅ Wasserstoff, Methyl, Methoxy oder Sulfo ist, (R₅')₁-₂ für 1 oder 2 gleiche oder voneinander verschiedene Substituenten ausgewählt aus der Gruppe Methyl und Methoxy steht und Y Vinyl oder β-Sulfatoethyl bedeutet.

D in den Verbindungen (b) steht bevorzugt für den Rest eines Monoazo-, Disazo-, Anthrachinon-, Formazan-, Phthalocyanin- oder Dioxazin-Chromophors und besonders bevorzugt für den Rest eines Monoazo-, Disazo- oder Formazan-Chromophors.

Beispiele für geeignete Chromophorreste D in den Verbindungen (b) sind:
(i) 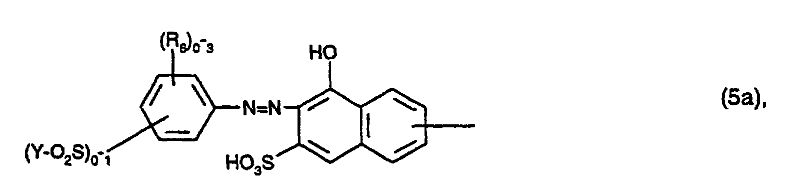 worin (R₆)₀₋₃ für 0 bis 3 gleiche oder verschiedene Substituenten aus der Gruppe C₁-C₄-Alkyl, C₁-C₄-Alkoxy, Halogen, Carboxy und Sulfo steht und Y die oben angegebene Bedeutung hat;
(ii) 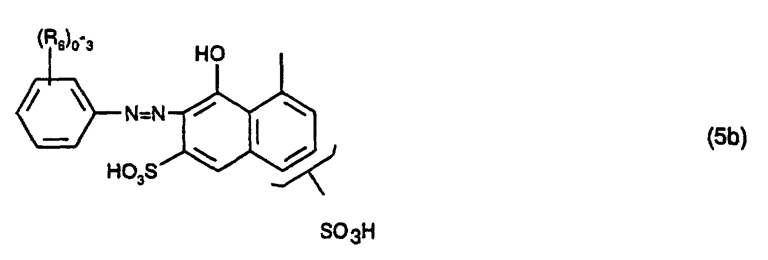 worin (R₆)₀₋₃ die zuvor angegebene Bedeutung hat oder ein Rest der Formel -SO₂-Y ist, wobei für Y die zuvor angegebenen Bedeutungen und Bevorzugungen gelten;
(iii) 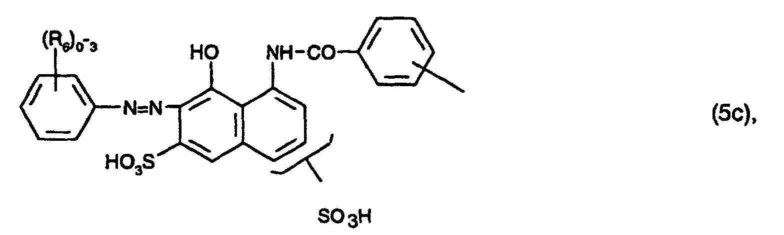 worin (R₆)₀₋₃ die zuvor angegebene Bedeutung hat,
(iv) 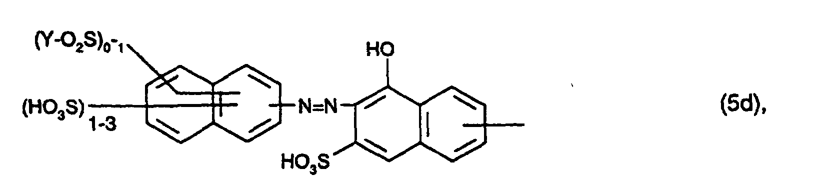 worin Y die zuvor angegebene Bedeutung hat;
(v) 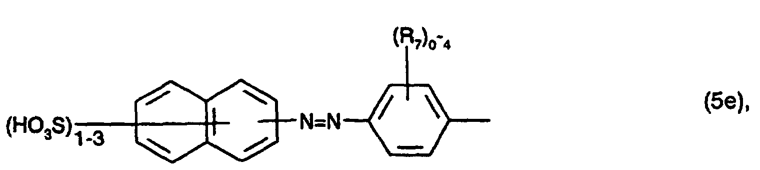 worin (R₇)₀₋₄ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomelhyt und Sulfo steht;
(vi) 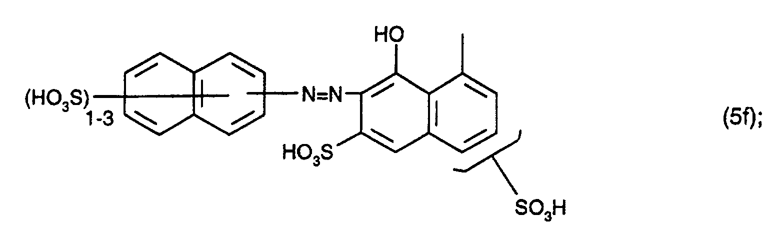
(vii) 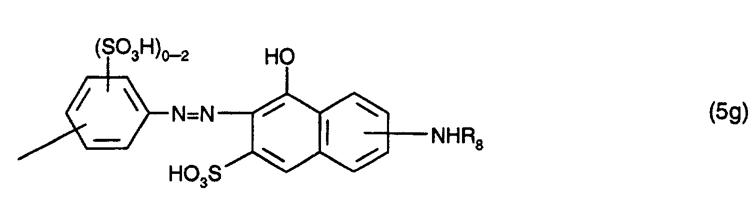 oder 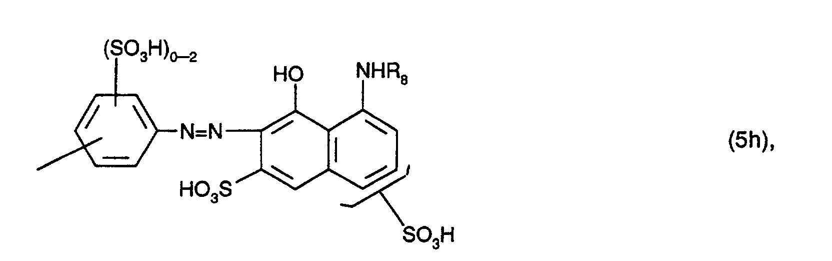 worin R₈ C₁-C₄-Alkanoyl oder Benzoyl ist, oder worin -NHR₈ für einen faserreaktiven Halogentriazinylrest der Formel (2e) 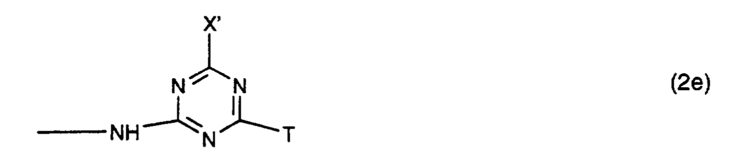 steht, worin X' für Halogen, 3-Carboxypyridin-1-yl oder 3-Carbamoylpyridin-1-yl, bevorzugt für Halogen, z.B. Fluor, Chlor oder Brom und besonders bevorzugt für Fluor oder Chlor steht, und für T unabhängig die zuvor für T' angegebenen Bedeutungen und Bevorzugungen gelten,
(viii) 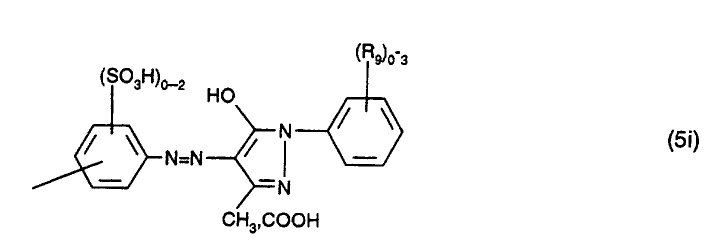 oder 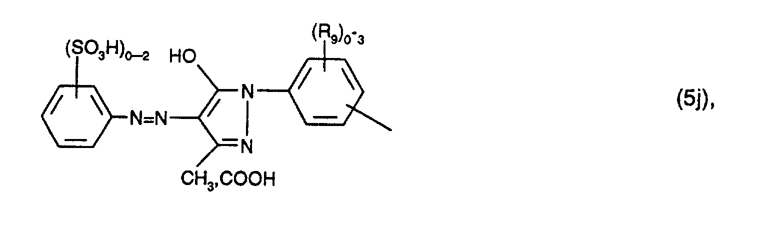 worin (R₉ )₀₋₃ für 0 bis 3 gleiche oder verschiedene Substituenten aus der Gruppe C₁-C₄-Alkyl, C₁-C₄-Alkoxy, Halogen, Carboxy und Sulfo steht;
(ix) 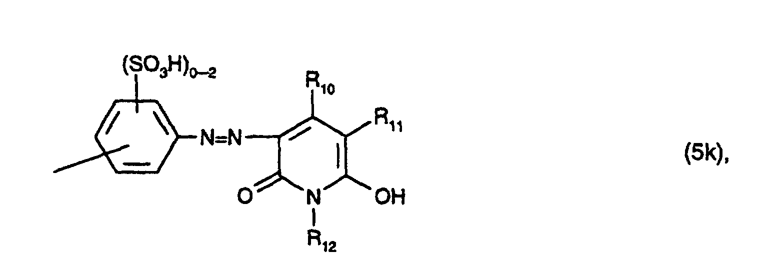 worin R₁₀ und R₁₂ unabhängig voneinander Wasserstoff, C₁-C₄-Alkyl oder Phenyl und R₁₁ Wasserstoff, Cyano, Carbamoyl oder Sulfomethyl ist;
(X) 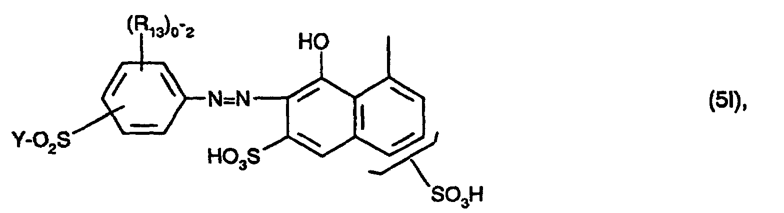 worin (R₁₃)₀₋₂ für 0 bis 2 gleiche oder verschiedene Substituenten aus der Gruppe C₁-C₄-Alkyl, C₁-C₄-Alkoxy, Halogen, Carboxy und Sulfo steht; und Y die oben angegebene Bedeutung hat,
(xi) 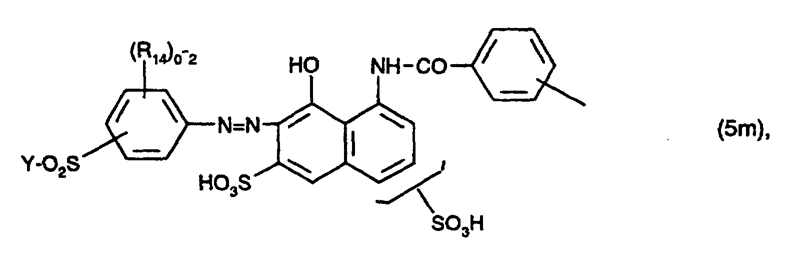 worin (R₁₄)₀₋₂ für 0 bis 2 gleiche oder verschiedene Substituenten aus der Gruppe C₁-C₄-Alkyl, C₁-C₄-Alkoxy, Halogen, Carboxy und Sulfo steht; und Y die oben angegebene Bedeutung hat;
(xii) 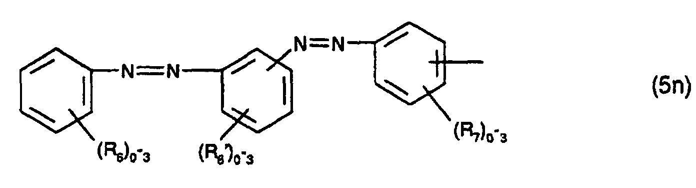 oder 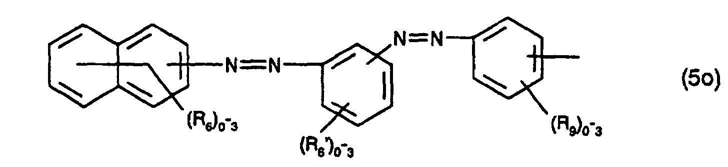 oder 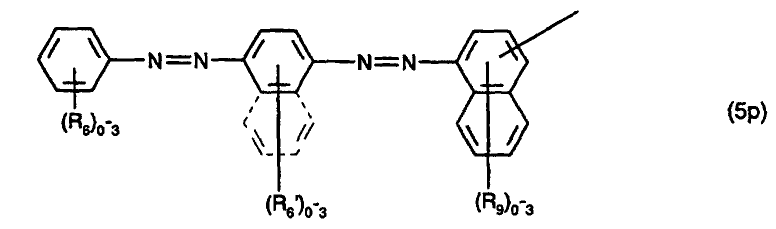 oder 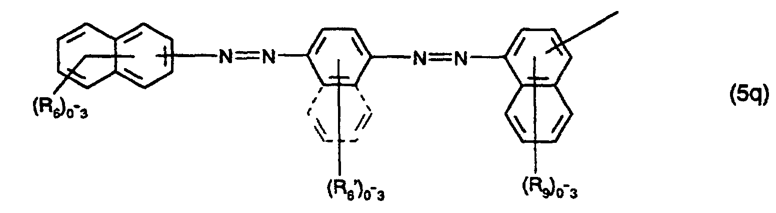 oder 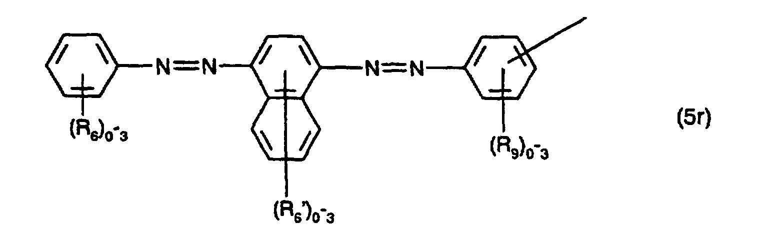 worin (R₆)₀₋₃, (R₇)₀₋₃ und (R₉)₀₋₃ jeweils die oben angegebene Bedeutung haben und (R₆')₀₋₃ für 0 bis 3 gleiche oder verschiedene Substituenten aus der Gruppe C₁-C₄-Alkyl, unsubstituiertes oder durch Hydroxy, Sulfato oder C₁-C₂-Alkoxy substituiertes C₁-C₄-Alkoxy, Halogen, Carboxy oder Sulfo steht;
(xiii) 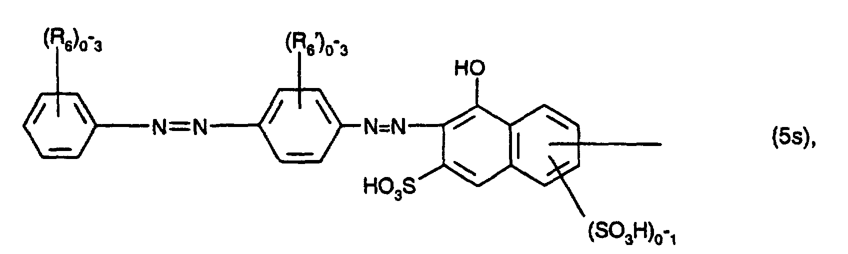 worin (R₆)₀₋₃ und (R₆')₀₋₃ jeweils die zuvor angegebene Bedeutung haben;
(xiv) 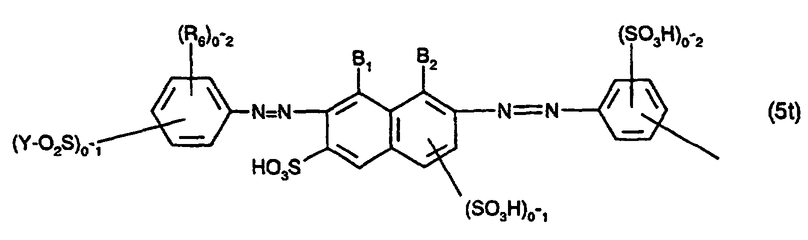 oder 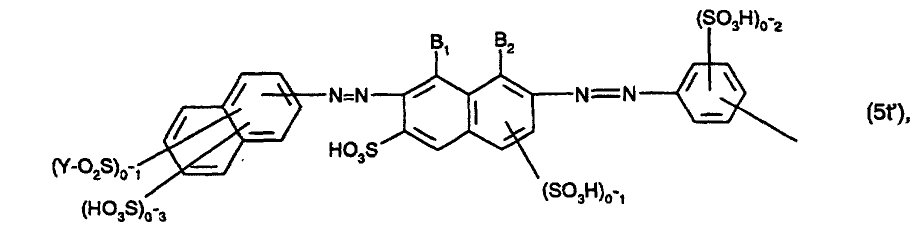 worin (R₆)₀₋₂ für 0 bis 2 gleiche oder verschiedene Substituenten aus der Gruppe C₁-C₄-Alkyl, C₁-C₄-Alkoxy, Halogen, Carboxy und Sulfo steht, eine der Variablen B₁ und B₂ Hydroxy und die andere Amino bedeutet und Y die zuvor angegebene Bedeutung hat;
(xv) 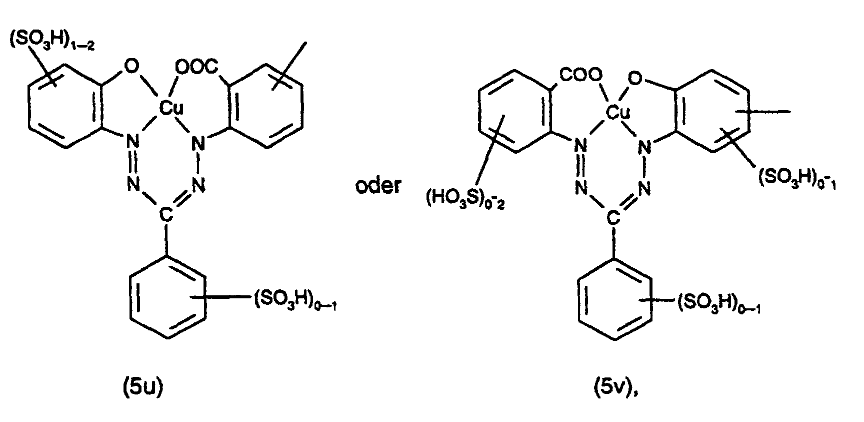 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind;
(xvi) 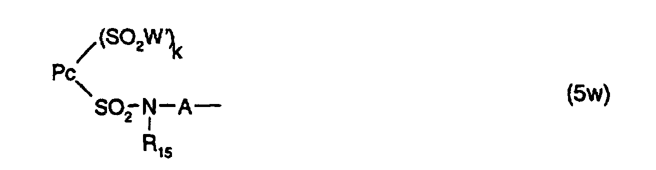 worin Pc der Rest eines Metallphthalocyanins, insbesondere der Rest eines Kupfer- oder Nickelphthalocyanins; W' -OH und/oder -NR₁₆R₁₆'; R₁₆ und R₁₆' unabhängig voneinander Wasserstoff oder gegebenenfalls durch Hydroxy oder Sulfo substituiertes C₁-C₄-Alkyl; R₁₅ Wasserstoff oder C₁-C₄-Alkyl; A ein gegebenenfalls durch C₁-C₄-Alkyl, Halogen, Carboxy oder Sulfo substituierter Phenylenrest oder ein C₂-C₆-Alkylenrest; und k 1 bis 3 sind;
(xvii) 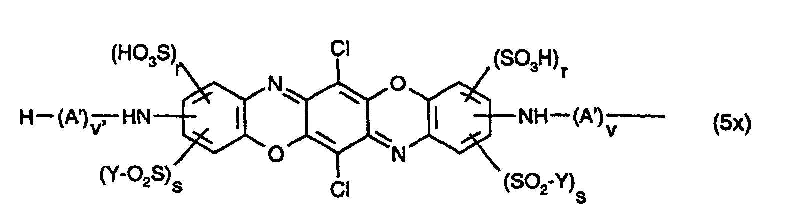 worin A' ein gegebenenfalls durch C₁-C₄-Alkyl, Halogen, Carboxy oder Sulfo substituierter Phenylenrest oder ein C₂-C₆-Alkylenrest ist, r, s, v und v' unabhängig voneinander je die Zahl 0 oder 1 bedeuten und Y die zuvor angegebene Bedeutung hat; und
(xviii) 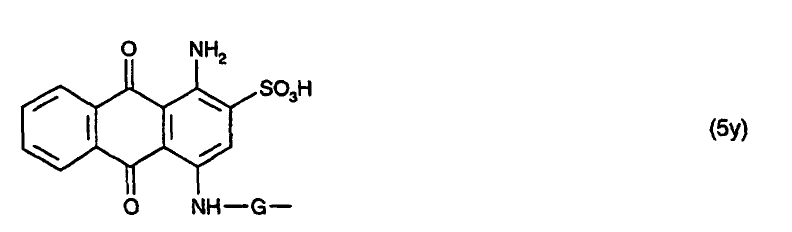 worin G einen unsubstituierten oder durch C₁-C₄-Alkyl, C₁-C₄-Alkoxy, Halogen, Carboxy oder Sulfo substituierten Phenylenrest oder einen Cyclohexylen-, Phenylenmethylen- oder C₂-C₆-Alkylenrest bedeutet.

D in den Verbindungen (b) steht insbesondere bevorzugt für einen Rest der zuvor angegebenen Formel (5b), (5e), (5f), (5k), (5t), (5t') oder (5v).

Eine besonders bevorzugte Ausführungsform der vorliegenden Erfindung betrifft Verbindungen (b) der Formel (1), worin D ein Rest der Formel 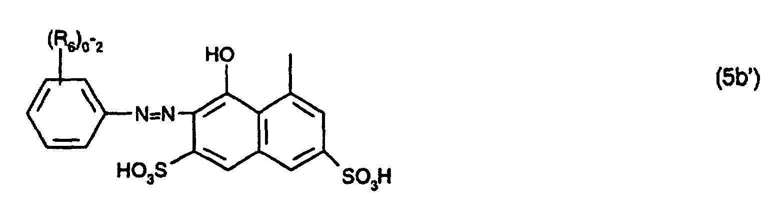 oder 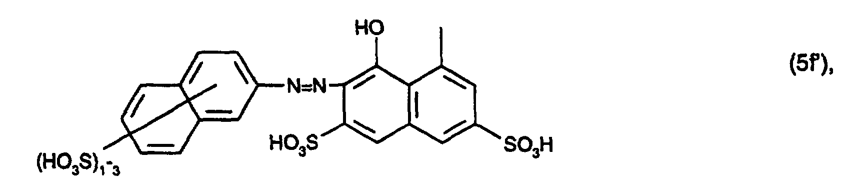 worin (R₆)₀₋₂ für 0 bis 2 gleiche oder verschiedene Substituenten aus der Gruppe Methyl, Methoxy, Sulfo, -SO₂-CH=CH₂ und -SO₂-CH₂CH₂-OSO₃H, insbesondere Methyl, Methoxy und Sulfo, steht; 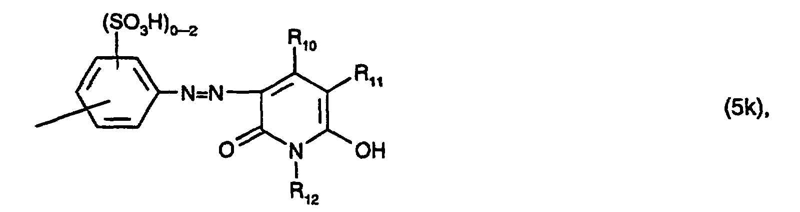 worin R₁₀ und R₁₂ unabhängig voneinander je C₁-C₄-Alkyl und R₁₁ Cyano, Carbamoyl oder Sulfomethyl sind; 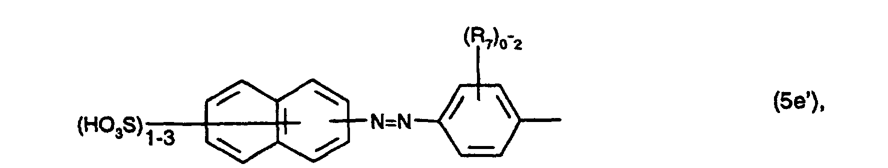 worin (R₇)₀₋₂ für 0 bis 2 gleiche oder verschiedene Substituenten aus der Gruppe C₁-C₄-Alkyl, C₁-C₄-Alkoxy, Acetylamino, Ureido und Sulfo steht; 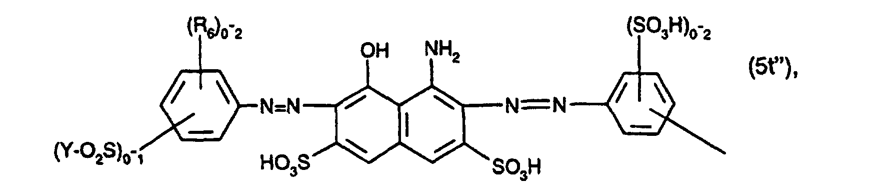 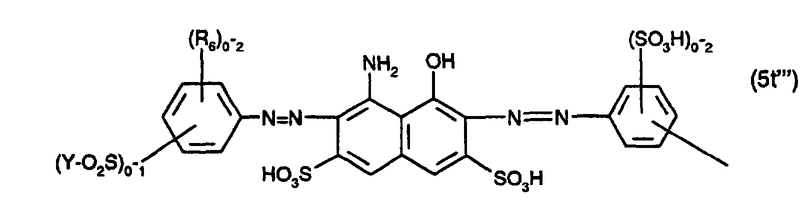 oder 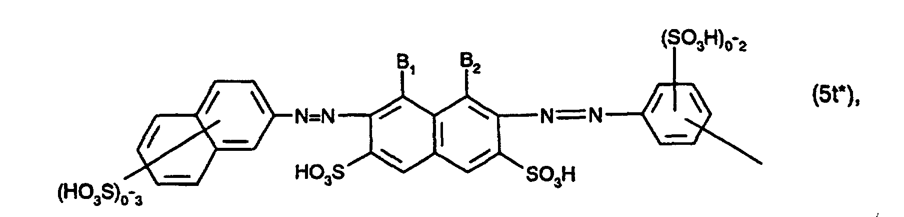 worin (R₆)₀₋₂ für 0 bis 2 gleiche oder verschiedene Substituenten aus der Gruppe Methyl, Methoxy und Sulfo steht, eine der Variablen B₁ und B₂ Hydroxy und die andere Amino bedeutet und Y Vinyl oder β-Sulfatoethyl ist; oder 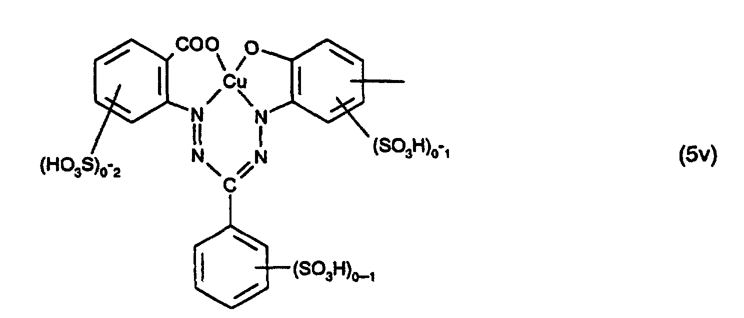 ist.

Die Verbindungen der Formel (1) enthalten mindestens eine, vorzugsweise mindestens zwei und besonders bevorzugt 2 bis 8 Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze, das Salz des Mono-, Di- oder Triäthanolamins oder Na/Li- oder Na/Li/NH₄-Mischsalze genannt.

Gegenstand der vorliegenden Erfindung ist ferner ein Verfahren zur Herstellung von Reaktivfarbstoffen der Formel (1), welches dadurch gekennzeichnet ist, dass man ein Moläquivalent einer Verbindung der Formel

Z - NH₂ (6)

diazotiert und auf ein Moläquivalent einer Verbindung der Formel 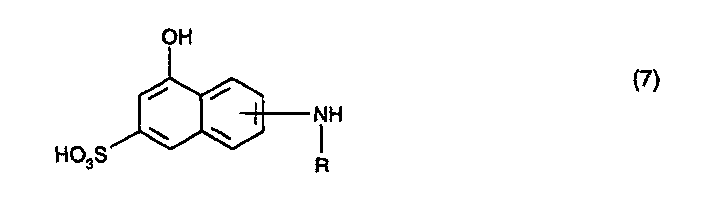 kuppelt und das Produkt mit je einem Moläquivalent einer Verbindung der Formel 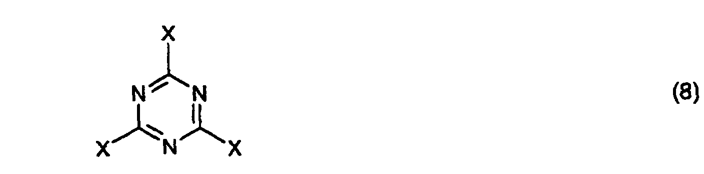 und

D-NHR₁ (9)

kondensiert,
oder ein Moläquivalent einer Verbindung der Formel (6) diazotiert und auf ein Moläquivalent eines Kondensationsprodukts aus je einem Moläquivalent einer Verbindung der Formel (7) und (8) kuppelt und das erhaltene Produkt mit einem Moläquivalent einer Verbindung der Formel (9) kondensiert;
oder ein Moläquivalent einer Verbindung der Formel (6) diazotiert und auf ein Moläquivalent eines Kondensationsprodukts aus je einem Moläquivalent einer Verbindung der Formel (7), (8) und (9) kuppelt;
oder zwei Moläquivalente einer Verbindung der Formel (6) diazotiert und auf ein Moläquivalent eines Kondensationsprodukts aus je einem Moläquivalent einer Verbindung der Formel (7) und (8) und einer Vorstufe der Verbindung der Formel (9) kuppelt;
wobei D, R, R₁, X und Z jeweils die zuvor angegebene Bedeutung haben.

Die Diazotierung der Verbindung der Formel (6) und ihre Kupplung mit der Verbindung der Formel (7) bzw. einem Umsetzungsprodukt der Verbindungen der Formeln (7), (8) und gegebenenfalls (9) erfolgt in üblicher Weise, z.B. indem man die Verbindung der Formel (6) in mineralsaurer Lösung, z.B. salzsaurer Lösung mit einem Nitrit, z.B. Natriumnitrit, bei niedriger Temperatur, z.B. bei 0 bis 5°C, diazotiert und anschliessend bei einem neutralen bis leicht sauren pH-Wert, z.B. bei pH 3 bis 7 und bevorzugt 5 bis 6,5, und niedrigen Temperaturen, z.B. 0 bis 30°C, mit der entsprechenden Kupplungskomponente kuppelt.

Die Kondensationsreaktionen zwischen den Verbindungen der Formeln (7), (8) und (9) erfolgen im allgemeinen analog zu bekannten Verfahren, in der Regel in wässriger Lösung bei Temperaturen von z.B. 0 bis 50°C und einem pH-Wert von z.B. 4 bis 10. Bedeutet D z.B. den Rest eines Monoazo- oder Polyazochromophors, kann anstelle der Verbindung der Formel (9) auch ein Vorprodukt, z.B. eine Diazokomponente oder Kupplungskomponente, in das Verfahren eingesetzt werden und der Rest D erst im weiteren Verlauf des Verfahrens durch eine entsprechende Diazotierungs- und Kupplungsreaktion fertiggestellt werden. Die wichtigsten Verfahrensvarianten sind in den Beispielen beschrieben.

Die Verbindungen der Formeln (6), (7), (8) und (9) sind bekannt oder können in Analogie zu bekannten Verbindungen hergestellt werden.

Die erfindungsgemässen Farbstoffe sind faserreaktiv. Unter faserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasem und Polyurethane, und insbesondere cellulosehaltige Fasermaterialien aller Art genannt. Solche cellulosehaltige Fasermaterialien sind beispielsweise die natürlichen Cellulosefasem, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffmischungen und die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung oder durch mehrstündiges Lagern bei Raumtemperatur fixiert werden. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe und insbesondere die erfindungsgemässen Farbstoffmischungen eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 18 Teile Cyanurchlorid werden in 45 Teilen Eis/Wasser bei ca. 0°C angeschlämmt und der pH-Wert mit Phosphorsäure auf 2 eingestellt. Man tropft eine neutrale Lösung von 32 Teilen 1-Amino-8-hydroxynaphthalin-3,6-disulfonsäure (H-Säure) in 320 Teilen Wasser zu und hält den pH-Wert durch Zugabe von Natriumhydroxidlösung konstant bei einem Wert von ca. 2. Nach beendeter Kondensation gibt man eine neutrale Lösung von 25 Teilen 1-Hydroxy-6-methylaminonaphthalin-3-sulfonsäure (N-Methyl-l-Säure) in 250 Teilen Wasser zu, erhöht den pH-Wert auf 7 und hält ihn durch Zugabe von Natriumhydroxidlösung konstant bei diesem Wert, bis die Kondensation beendet ist.

56 Teile 4-(2-Sulfatoethylsulfonyl)-anilin werden in 560 Teilen Wasser angeschlämmt und der pH-Wert auf 4,5 und die Temperatur auf 0°C eingestellt. Man gibt 18 Teile Natriumnitrit und 50 Teile konz. HCI zu, rührt eine Stunde bei 0°C und zerstört überschüssiges Nitrit mit Sulfaminsäure (Lösung der Diazokomponente 1).

Die oben hergestellte das Kondensationsprodukt von Cyanurchlorid mit H-Säure und N-Methyl-I-Säure enthaltende Reaktionslösung wird zur Lösung der Diazokomponente gegeben, der pH-Wert auf 6,5 erhöht und während der folgenden Kupplung bei diesem Wert gehalten. Danach wird die erhaltene Farbstofflösung dialytisch von anorganischen Salzen befreit und eingedampft, wobei sich die Verbindung der Formel 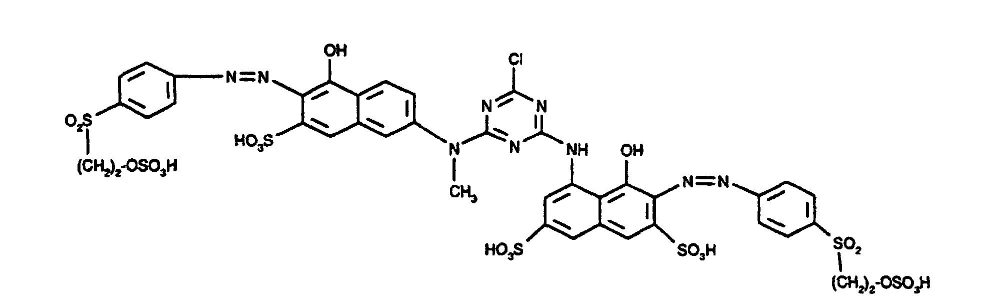 als rotes Pulver ergibt, welches Baumwolle in leuchtend roten Tönen mit guten Allgemeinechtheiten färbt.

Beispiele 2 bis 8: Analog wie im Beispiel 1 beschrieben lassen sich die Verbindungen der Formel 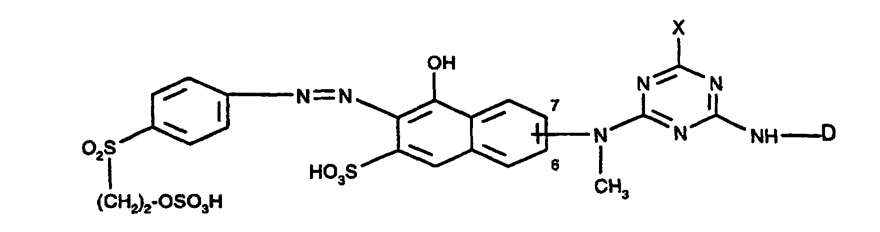 herstellen, worin D und X die in der folgenden Tabelle 1 angegebene Bedeutung haben und die Gruppe -N(CH₃)- die dort angegebene Verknüpfungsposition hat.

**Tabelle 1**

| Beispiel Nr. | Position -N(CH₃) am Naphthylring | X | D |
|---|---|---|---|
| 2 | 6 | Cl | 8-Hydroxy-7-(4-[2-Sulfatoethylsulfonyl]-phenylazo)-4,6-disulfo-1-naphthyl |
| | | | |
| 3 | 7 | Cl | 8-Hydroxy-7-(4-[2-Sulfatoethylsulfonyl]-phenylazo)-3,6-disulfo-1-naphthyl |
| | | | |
| 4 | 7 | Cl | 8-Hydroxy-7-(4-[2-Sulfatoethylsulfonyl]-phenylazo)-4,6-disulfo-1-naphthyl |
| | | | |
| 5 | 6 | F | 8-Hydroxy-7-(4-[2-Sulfatoethylsulfonyl]-phenylazo)-3,6-disulfo-1-naphthyl |
| | | | |
| 6 | 6 | F | 8-Hydroxy-7-(4-[2-Sulfatoethylsulfonyl]-phenylazo)-4,6-disulfo-1-naphthyl |
| | | | |
| 7 | 7 | F | 8-Hydroxy-7-(4-[2-Sulfatoethylsulfonyl]-phenylazo)-3,6-disulfo-1-naphthyl |
| | | | |
| 8 | 7 | F | 8-Hydroxy-7-(4-[2-Sulfatoethylsulfonyl]-phenylazo)-4,6-disulfo-1 -naphthyl |

Beispiele 9 bis 16: Analog wie im Beispiel 1 beschrieben lassen sich die Verbindungen der Formel 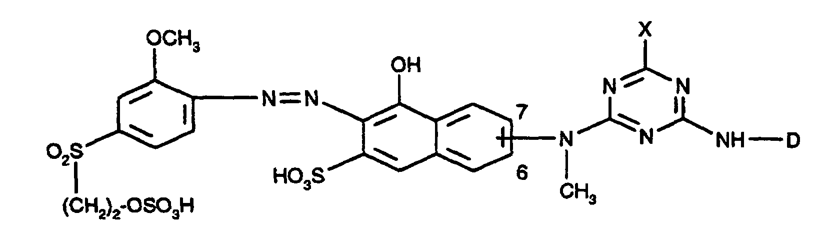 herstellen, worin D und X die in der folgenden Tabelle 2 angegebene Bedeutung haben und die Gruppe -N(CH₃)- die dort angegebene Verknüpfungsposition hat.

**Tabelle 2**

| Beispiel Nr. | Position -N(CH₃) am Naphthylring | X | D |
|---|---|---|---|
| 9 | 6 | Cl | 8-Hydroxy-7-(2-Methoxy-4-[2-Sulfatoethylsulfonyl]-phenylazo)-3,6-disulfo-1-naphthyl |
| | | | |
| 10 | 6 | Cl | 8-Hydroxy-7-(2-Methoxy-4-[2-Sulfatoethylsulfonyl]-phenylazo)-4,6-disulfo-1-naphthyl |
| | | | |
| 11 | 7 | Cl | 8-Hydroxy-7-(2-Methoxy-4-[2-Sulfatoethylsulfonyl]-phenylazo)-3,6-disulfo-1-naphthyl |
| | | | |
| 12 | 7 | Cl | 8-Hydroxy-7-(2-Methoxy-4-[2-Sulfatoethylsulfonyl]-phenylazo)-4,6-disulfo-1-naphthyl |
| | | | |
| 13 | 6 | F | 8-Hydroxy-7-(2-Methoxy-4-[2-Sulfatoethylsulfonyl]-phenylazo)-3,6-disulfo-1-naphthyl |
| | | | |
| 14 | 6 | F | 8-Hydroxy-7-(2-Methoxy-4-[2-Sulfatoethylsulfonyl]-phenylazo)-4,6-disulfo-1-naphthyl |
| | | | |
| 15 | 7 | F | 8-Hydroxy-7-(2-Methoxy-4-[2-Sulfatoethylsulfonyl]-phenylazo)-3,6-disulfo-1-naphthyl |
| | | | |
| 16 | 7 | F | 8-Hydroxy-7-(2-Methoxy-4-[2-Sulfatoethylsulfonyl]-phenylazo)-4,6-disulfo-1-naphthyl |

Beispiele 17 bis 24: Analog wie im Beispiel 1 beschrieben lassen sich die Verbindungen der Formel 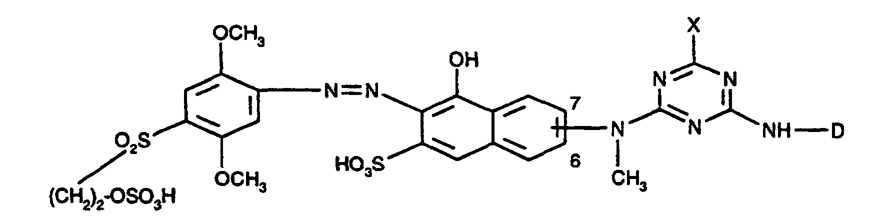 herstellen, worin D und X die in der folgenden Tabelle 3 angegebene Bedeutung haben und die Gruppe -N(CH₃)- die dort angegebene Verknüpfungsposition hat.

**Tabelle 3**

| Beispiel Nr. | Position -N(CH₃) am Naphthylring | X | D |
|---|---|---|---|
| 17 | 6 | Cl | 8-Hydroxy-7-(2,5-Dimethoxy-4. [2-Sulfatoethylsulfonyl]-phenylazo)-3,6-disulfo-1-naphthyl |
| | | | |
| 18 | 6 | Cl | 8-Hydroxy-7-(2-Sulfo-4-[2-Sulfato-ethylsulfonyl]-phenylazo)-4,6-disulfo-1-naphthyl |
| | | | |
| 19 | 7 | Cl | 8-Hydroxy-7-(2,5-Dimethoxy-4-[2-Sulfatoethylsulfonyl]-phenylazo)-3,6-disulfo-1-naphthyl |
| | | | |
| 20 | 7 | Cl | 8-Hydroxy-7-(2,5-Dimethoxy-4-[2-Sulfatoethylsulfonyl]-phenylazo)-4,6-disulfo-1-naphthyl |
| | | | |
| 21 | 6 | F | 8-Hydroxy-7-(2,5-Dimethoxy-4-[2-Sulfatoethylsulfonyl]-phenylazo)-3,6-disulfo-1-naphthyl |
| | | | |
| 22 | 6 | F | 8-Hydroxy-7-(2,5-Dimethoxy-4-[2-Sulfatoethylsulfonyl]-phenylazo-)-4,6-disulfo-1-naphthyl |
| | | | |
| 23 | 7 | F | 8-Hydroxy-7-(2,5-Dimethoxy-4-[2-Sulfatoethylsulfonyl]-phenylazo)-3,6-disulfo-1-naphthyl |
| | | | |
| 24 | 7 | F | 8-Hydroxy-7-(2,5-Dimethoxy-4-[2-Sulfatoethylsulfonyl]-phenylazo)-4,6-disulfo-1-naphthyl |

Beispiele 25 bis 32: Analog wie im Beispiel 1 beschrieben lassen sich die Verbindungen der Formel 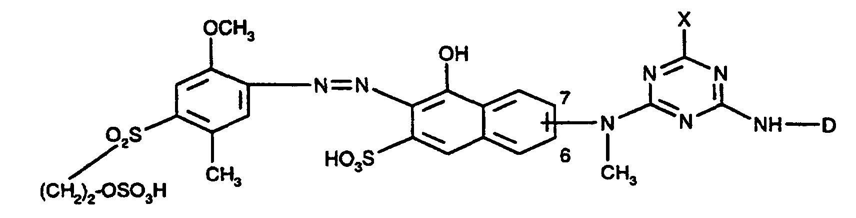 herstellen, worin D und X die in der folgenden Tabelle 4 angegebene Bedeutung haben und die Gruppe -N(CH3)- die dort angegebene Verknüpfungsposition hat.

**Tabelle 4**

| Beispiel Nr. | Position -N(CH₃) am Naphthylring | X | D |
|---|---|---|---|
| 25 | 6 | Cl | 8-Hydroxy-7-(2-Methoxy-5-methyl-4-[2-Sulfatoethylsulfonyl]-phenylazo)-3,6-disulfo-1-naphthyl |
| | | | |
| 26 | 6 | Cl | 8-Hydroxy-7-(2-Methoxy-5-methyl-4-[2-Sulfato-ethylsulfonyl]-phenylazo)-4,6-disulfo-1-naphthyl |
| | | | |
| 27 | 7 | Cl | 8-Hydroxy-7-(2-Sulfo-4-[2-Sulfatoethylsulfonyl]-phenylazo)-3,6-disulfo-1-naphthyl |
| | | | |
| 28 | 7 | Cl | 8-Hydroxy-7-(2-Methoxy-5-methyl-4-[2-Sulfatoethylsulfonyl]-phenylazo)-4,6-disulfo-1-naphthyl |
| | | | |
| 29 | 6 | F | 8-Hydroxy-7-(2-Methoxy-5-methyl-4-[2-Sulfatoethylsulfonyl]-phenylazo)-3,6-disulfo-1-naphthyl |
| | | | |
| | | | |
| 30 | 6 | F | 8-Hydroxy-7-(2-Methoxy-5-methyl-4-[2-Sulfatoethylsulfonyl]-phenylazo)-4,6-disulfo-1-naphthyl |
| 31 | 7 | F | 8-Hydroxy-7-(2-Methoxy-5-methyl-4-[2-Sulfatoethylsulfonyl]-phenylazo)-3,6-disulfo-1 -naphthyl |
| | | | |
| 32 | 7 | F | 8-Hydroxy-7-(2-Methoxy-5-methyl-4-[2-Sulfatoethylsulfonyl]-phenylazo)-4,6-disulfo-1-naphthyl |

Beispiele 33 bis 40: Analog wie im Beispiel 1 beschrieben lassen sich die Verbindungen der Formel 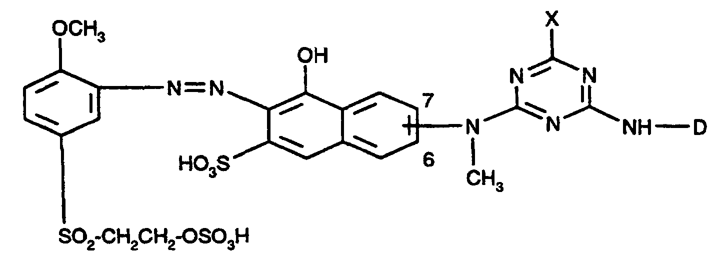 herstellen, worin D und X die in der folgenden Tabelle 5 angegebene Bedeutung haben und die Gruppe -N(CH₃)- die dort angegebene Verknüpfungsposition hat.

**Tabelle 5**

| Beispiel Nr. | Position -N(CH₃) am Naphthylring | X | D |
|---|---|---|---|
| 33 | 6 | Cl | 8-Hydroxy-7-(2-Methoxy-5-[2-Sulfato-ethylsulfonyl]-phenylazo)-3,6-disulfo-1-naphthyl |
| | | | |
| 34 | 6 | Cl | 8-Hydroxy-7-(2-Methoxy-5-[2-Sulfato-ethylsulfonyl]-phenylazo)-4,6-disulfo-1-naphthyl |
| | | | |
| 35 | 7 | Cl | 8-Hydroxy-7-(2-Methoxy-5-[2-Sulfatoethylsulfonyl]-phenylazo)-3,6-disulfo-1-naphthyl |
| | | | |
| 36 | 7 | Cl | 8-Hydroxy-7-(2-Methoxy-5-[2-Sulfatoethylsulfonyl]-phenylazo)-4,6-disulfo-1-naphthyl |
| | | | |
| 37 | 6 | F | 8-Hydroxy-7-(2-Methoxy-5-[2-Sulfatoethylsulfonyl]-phenylazo)-3,6-disulfo-1-naphthyl |
| | | | |
| 38 | 6 | F | 8-Hydroxy-7-(2-Methoxy-5-[2-Sulfatoethylsulfonyl]-phenylazo)-4,6-disulfo-1-naphthyl |
| | | | |
| 39 | 7 | F | 8-Hydroxy-7-(2-Methoxy-5-[2-Sulfatoethylsulfonyl]-phenylazo)-3,6-disulfo-1-naphthyl |
| | | | |
| 40 | 7 | F | 8-Hydroxy-7-(2-Methoxy-5-[2-Sulfatoethylsulfonyl]-phenylazo)-4,6-disulfo-1-naphthyl |

Beispiel 41:18 Teile Cyanurchlorid werden in 45 Teilen Eis/Wasser bei ca. 0°C angeschlämmt und der pH-Wert mit Phosphorsäure auf 2 eingestellt. Man tropft eine neutrale Lösung von 32 Teilen 1-Amino-8-hydroxynaphthalin-3,6-disulfonsäure (H-Säure) in 320 Teilen Wasser zu und hält den pH-Wert durch Zugabe von Natriumhydroxidlösung konstant bei einem Wert von ca. 2. Nach beendeter Kondensation gibt man die halbe Menge der gemäss Beispiel 1 hergestellten Lösung der Diazokomponente 1 zu und kontrolliert den pH-Wert durch Zugabe von Natriumhydroxidlösung so, dass er konstant bei ca. 6,5 liegt. Nach beendeter Kupplung gibt man eine neutrale Lösung von 25 Teilen N-Methyl-1-Säure in 250 Teilen Wasser zu, erhöht den pH-Wert auf 7 und hält ihn durch Zugabe von Natriumhydroxidlösung konstant bei diesem Wert, bis die Kondensation beendet ist.

Die Reaktionslösung wird zu einer Diazolösung, welche zuvor aus 20 Teilen 2-Amino-5-methoxybenzolsulfonsäure in 200 Teilen Wasser, 9 Teilen Natriumnitrit und 25 Teilen konz. HCI analog wie in Beispiel 1 für die Lösung der Diazokomponente 1 beschrieben bereitet worden ist, gegeben, der pH-Wert mit Natriumhydroxidlösung auf 6,5 eingestellt und während der folgenden Kupplung bei diesem Wert gehalten. Am Ende wird die erhaltene Farbstofflösung dialytisch von anorganischen Salzen befreit und eingedampft. Es ergibt sich die Verbindung der Formel 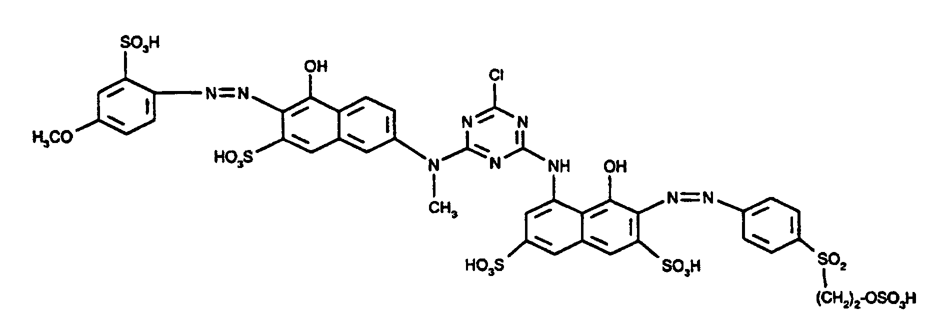 als rotes Pulver, welches Baumwolle in leuchtend roten Tönen mit guten Allgemeinechtheiten färbt.

Beispiele 42 bis 80: Analog wie im Beispiel 41 beschrieben lassen sich die Verbindungen der Formel 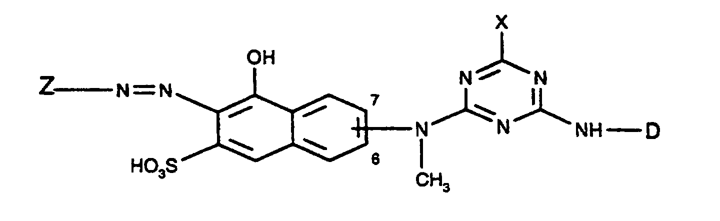 herstellen, worin D, X und Z die in der folgenden Tabelle 6 angegebene Bedeutung haben und die Gruppe -N(CH₃)- die dort angegebene Verknüpfungsposition hat.

**Tabelle 6**

| Beispiel Nr | Position -N(CH₃) am Naphthylring | X | D | Z |
|---|---|---|---|---|
| 42 | 6 | Cl | 8-Hydroxy-7-(4-[2-Sulfatoethylsulfonyl]-phenylazo)-3,6-disulfo-1-naphthyl | 2-Methoxy-4-(2-sulfatoethylsulfonyl)-phenyl |
| 43 | 6 | Cl | 8-Hydroxy-7-(4-[2-Sulfatoethylsulfonyl]-phenylazo)-4,6-disulfo-1-naphthyl | 4-Methoxy-2-sulfo-phenyl |
| 44 | 6 | Cl | 8-Hydroxy-7-(4-[2-Sulfatoethylsulfonyl]-phenylazo)-4,6-disulfo-1-naphthyl | 2-Sulfo-4-(2-sulfatoethylsulfonyl)-phenyl |
| 45 | 7 | Cl | 8-Hydroxy-7-(4-[2-Sulfatoethylsulfonyl]-phenylazo)-3,6-disulfo-1-naphthyl | 4-Methoxy-2-sulfo-phenyl |
| 46 | 7 | Cl | 8-Hydroxy-7-(4-[2-Sulfatoethylsulfonyl]-phenylazo)-3,6-disulfo-1-naphthyl | 2-Methoxy-5-methyl-4(2-sulfatoethylsulfonyl)phenyl |
| 47 | 7 | Cl | 8-Hydroxy-7-(4-[2-Sulfatoethylsulfonyl]-phenylazo)-4,6-disulfo-1-naphthyl | 4-Methoxy-2-sulfo-phenyl |
| 48 | 7 | Cl | 8-Hydroxy-7-(4-[2-Sulfatoethylsulfonyl]-phenylazo)-4,6-disulfo-1-naphthyl | 2-Methoxy-5-(2-sulfatoethylsulfonyl)-phenyl |
| 49 | 6 | Cl | 8-Hydroxy-7-(4-[2-Sulfatoethylsulfonyl]-phenylazo)-3,6-disulfo-1-naphthyl | 4-Sulfophenyl |
| 50 | 6 | Cl | 8-Hydroxy-7-(4-[2-Sulfatoethylsulfonyl]-phenylazo)-3,6-disulfo-1 -naphthyl | 2-Methoxy-4-(2-sulfatoethylsulfonyl)-phenyl |
| 51 | 6 | F | 8-Hydroxy-7-(4-[2-Sulfatoethylsulfonyl]-phenylazo)-3,6-disulfo-1-naphthyl | 4-Methoxy-2-sulfo-phenyl |
| 52 | 6 | F | 8-Hydroxy-7-(4-[2-Sulfatoethylsulfonyl]-phenylazo)-3,6-disulfo-1-naphthyl | 2,5 Dimethoxy-4-(2-sulfatoethylsulfonyl)-phenyl |
| 53 | 6 | F | 8-Hydroxy-7-(4-[2-Sulfatoethylsulfonyl]-phenylazo)-4,6-disulfo-1-naphthyl | 4-Methoxy-2-sulfo-phenyl |
| 54 | 6 | F | 8-Hydroxy-7-(4-[2-Sulfatoethylsulfonyl]-phenylazo)-4,6-disulfo-1-naphthyl | 2-Methoxy-5-methyl-4-(2-sulfatoethylsulfonyl)-phenyl |
| 55 | 7 | F | 8-Hydroxy-7-(4-[2-Sulfatoethylsulfonyl]-phenylazo)-3,6-disulfo-1-naphthyl | 4-Methoxy-2-sulfo-phenyl |
| 56 | 7 | F | 8-Hydroxy-7-(4-[2-Sulfatoethylsulfonyl]-phenylazo)-3,6-disulfo-1-naphthyl | 2-Methoxy-5-(2-sulfatoethylsulfonyl)-phenyl |
| 57 | 7 | F | 8-Hydroxy-7-(4-[2-Sulfatoethylsulfonyl]-phenylazo)-4,6-disulfo-1-naphthyl | 4-Methoxy-2-sulfo-phenyl |
| 58 | 7 | F | 8-Hydroxy-7-(4-[2-Sulfatoethylsulfonyl]-phenylazo)-4,6-disulfo-1-naphthyl | 2-Methoxy-4-(2-sulfatoethylsulfonyl)-phenyl |
| 59 | 6 | F | 8-Hydroxy-7-(4-[2-Sulfatoethylsulfonyl]-phenylazo)-3,6-disulfo-1-naphthyl | 4-Methyl-2,5-disulfophenyl |
| 60 | 6 | F | 8-Hydroxy-7-(4-[2-Sulfatoethylsulfonyl]-phenylazo)-3,6-disulfo-1-naphthyl | 2,5 Dimethoxy-4-(2-sulfatoethylsulfonyl)-phenyl |
| 61 | 6 | Cl | 8-Hydroxy-7-(4-methoxy-2-sulfophenylazo)-3,6-disulfo-1-naphthyl | 4-(2-sulfatoethylsulfonyl)-phenyl |
| 62 | 6 | Cl | 8-Hydroxy-7-(4-methoxy-2-sulfophenylazo)-3,6-disulfo-1-naphthyl | 2-Methoxy-5-methyl-4-(2-sulfatoethylsulfonyl)-phenyl |
| 63 | 6 | Cl | 8-Hydroxy-7-(4-methoxy-2-sulfophenylazo)-4,6-disulfo-1-naphthyl | 4-(2-sulfatoethylsulfonyl)-phenyl |
| 64 | 6 | Cl | 8-Hydroxy-7-(4-methoxy-2-sulfophenylazo)-4,6-disulfo-1-naphthyl | 2-Methoxy-5-(2-sulfatoethylsulfonyl)-phenyl |
| 65 | 7 | Cl | 8-Hydroxy-7-(4-methoxy-2-sulfophenylazo)-3,6-disulfo-1-naphthyl | 4-(2-sulfatoethylsulfonyl)-phenyl |
| 66 | 7 | Cl | 8-Hydroxy-7-(4-methoxy-2-sulfophenylazo)-3,6-disulfo-1-naphthyl | 2-Sulfo-4-(2-sulfatoethylsulfonyl)-phenyl |
| 67 | 7 | Cl | 8-Hydroxy-7-(4-methoxy-2-sulfophenylazo)-4,6-disulfo-1-naphthyl | 4-(2-sulfatoethylsulfonyl)-phenyl |
| 68 | 7 | Cl | 8-Hydroxy-7-(4-methoxy-2-sulfophenylazo)-4,6-disulfo-1-naphthyl | 2,5 Dimethoxy-4-(2-sulfatoethylsulfonyl)-phenyl |
| 69 | 6 | Cl | 8-Hydroxy-7-(4-methoxy-2-sulfophenylazo)-3,6-disulfo-1-naphthyl | 1-Sulfo-2-naphthyl |
| 70 | 6 | Cl | 8-Hydroxy-7-(4-methoxy-2-sulfophenylazo)-3,6-disulfo-1-naphthyl | 2-Methoxy-5-methyl-4-(2-sulfatoethylsulfonyl)-phenyl |
| 71 | 6 | F | 8-Hydroxy-7-(4-methoxy-2-sulfophenylazo)-3,6-disulfo-1-naphthyl | 4-(2-sulfatoethylsulfonyl)-phenyl |
| 72 | 6 | F | 8-Hydroxy-7-(4-methoxy-2-sulfophenylazo)-3,6-disulfo-1-naphthyl | 2-Methoxy-5-(2-sulfa-toethylsulfonyl)-phenyl |
| 73 | 6 | F | 8-Hydroxy-7-(4-methoxy-2-sulfophenylazo)-4,6-disulfo-1-naphthyl | 4-(2-sulfatoethylsulfonyl)-phenyl |
| 74 | 6 | F | 8-Hydroxy-7-(4-methoxy-2-sulfophenylazo)-4,6-disulfo-1-naphthyl | 2-Methoxy-4-(2-sulfatoethylsulfonyl)-phenyl |
| 75 | 7 | F | 8-Hydroxy-7-(4-methoxy-2-sulfophenylazo)-3,6-disulfo-1-naphthyl | 4-(2-sulfatoethylsulfonyl)-phenyl |
| 76 | 7 | F | 8-Hydroxy-7-(4-methoxy-2-sulfophenylazo)-3,6-disulfo-1-naphthyl | 2,5 Dimethoxy-4-(2-sulfatoethylsulfonyl)-phenyl |
| 77 | 7 | F | 8-Hydroxy-7-(4-methoxy-2-sulfophenylazo)-4,6-disulfo-1-naphthyl | 4-(2-sulfatoethylsulfonyl)-phenyl |
| 78 | 7 | F | 8-Hydroxy-7-(4-methoxy-2-sulfophenylazo)-4,6-disulfo-1-naphthyl | 2-Methoxy-5-methyl-4-(2-sulfatoethylsulfonyl)-phenyl |
| 79 | 6 | F | 8-Hydroxy-7-(4-methoxy-2-sulfophenylazo)-3,6-disulfo-1-naphthyl | 1-Sulfo-2-naphthyl |
| 80 | 6 | F | 8-Hydroxy-7-(4-methoxy-2-sulfophenylazo)-3,6-disulfo-1-naphthyl | 2-Methoxy-5-(2-sulfatoethylsulfonyl)-phenyl |

### Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Färbevorschrift II

2 Teile des gemäss Beispiel 1 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

### Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10Minuten werden 200Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

### Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70% seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

### Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75% Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

### Färbevorschrift VII

0,1 Teile Farbstoff gemäss Beispiel 1 werden in 200 Teilen entmineralisiertem Wasser gelöst und 0,5 Teile Glaubersalz, 0,1 Teile eines Egalisiermittels sowie 0,5 Teile Natriumacetat zugegeben. Dann wird mit 80%iger Essigsäure auf pH 5,5 eingestellt. Das Färbebad wird 10 Minuten auf 50°C erwärmt und dann 10 Teile eines Wollgewebes zugegeben. Man erwärmt innerhalb von ca. 50 Minuten auf 100°C und färbt 60 Minuten bei dieser Temperatur. Danach lässt man auf 90°C abkühlen und entnimmt das Färbegut. Das Wollgewebe wird mit warmem und kaltem Wasser gespült, anschliessend geschleudert und getrocknet. Es wird eine brillante Färbung erhalten, die sehr gute Licht- und Nassechtheiten aufweist.

### Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginat verdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2Minuten bei 102°C in gesättigtem Dampf. Das bedruckte Gewebe wird dann gespült, gegebenenfalls kochend geseift und nochmals gespült, und anschliessend getrocknet.

Druckvorschrift II: 5 Teile des gemäss Beispiel 1 erhaltenen Reaktivfarbstoffes werden unter schnellem Rühren in 100 Teile einer Stammverdickung, enthaltend 50 Teile 5%ige Natriumalgin verdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 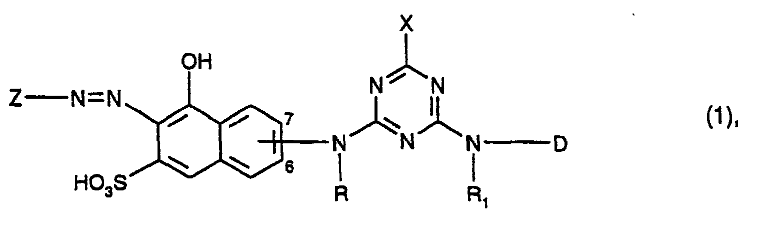 worin
R gegebenenfalls substituiertes C₁-C₄-Alkyl bedeutet,
R₁ Wasserstoff ist,
X für Halogen steht,
Z durch einen oder mehrere gleiche oder verschiedene Substituenten aus der Gruppe Sulfo, C₁-C₄-Alkyl, C₁-C₄-Alkoxy und Reaktivrest-der Formel
-SO₂-Y (2a),
-CONH-(CH₂)ₙ-SO₂-Y (2b)
oder
-NH-CO-Y₁ (2d)
substituiertes Phenyl bedeutet, worin
Y Vinyl, β-Chlorethyl, β-Sulfatoethyl, β-Thiosulfatoethyl, β-Acetoxyethyl, β-Phenoxyethyl oder β-Phosphatoethyl,
Y₁ eine Gruppe -CHX₁-CH₂X₁ oder -CX₁=CH₂ und X₁ Brom oder Chlor, und
n eine ganze Zahl von 1 bis 6 sind, oder
Z durch Sulfo oder einen Reaktivrest der oben angegebenen Formel (2a) substituiertes 1-oder 2-Naphthyl ist;
und D einen Rest der Formel 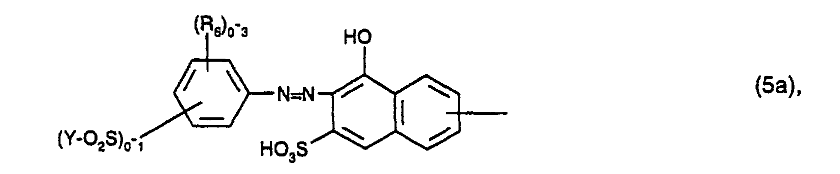 worin (R₆)₀₋₃ für 0 bis 3 gleiche oder verschiedene Substituenten aus der Gruppe C₁-C₄-Alkyl, C₁-C₄-Alkoxy, Halogen, Carboxy und Sulfo steht und Y die oben angegebene Bedeutung hat; 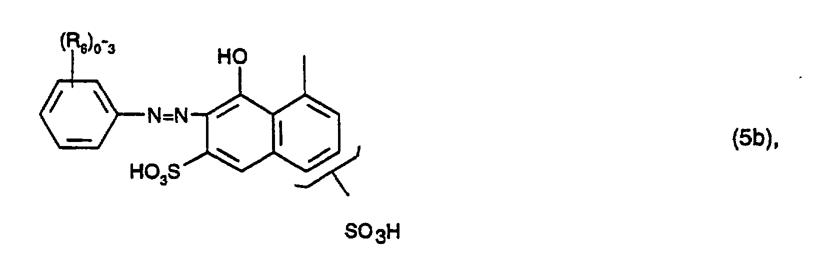 worin (R₆)₀₋₃ die zuvor angegebene Bedeutung hat oder ein Rest der Formel -SO₂-Y ist, wobei für Y die zuvor angegebenen Bedeutungen gelten; 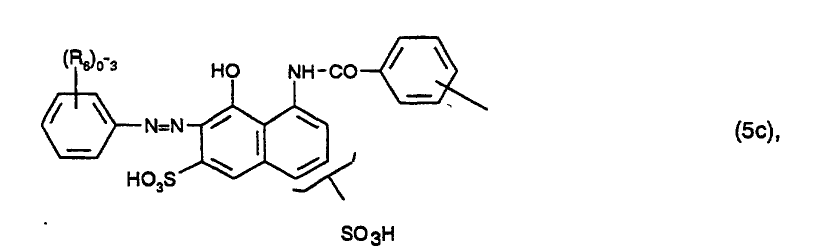 worin (R₆)₀₋₃ die zuvor angegebene Bedeutung hat, 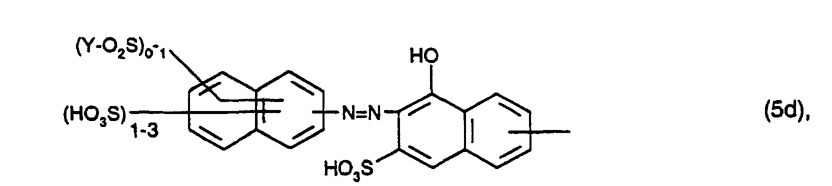 worin Y die zuvor angegebene Bedeutung hat; 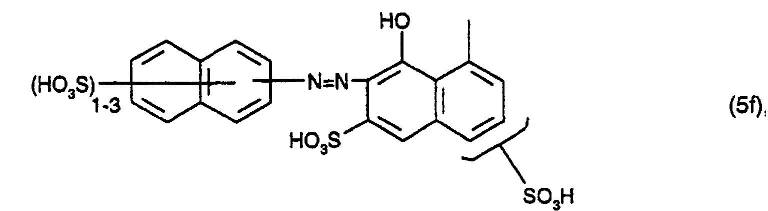 oder 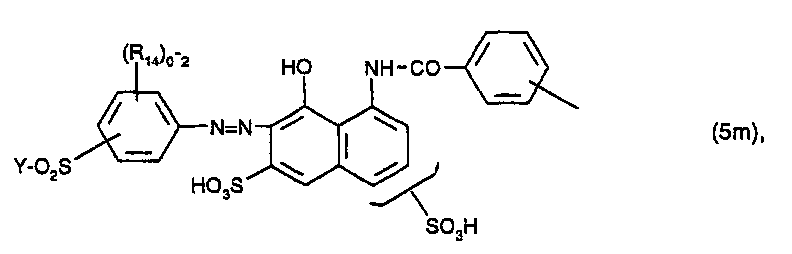 worin
(R₁₄)₀₋₂ für 0 bis 2 gleiche oder verschiedene Substituenten aus der Gruppe C₁-C₄-Alkyl, C₁-C₄-Alkoxy, Halogen, Carboxy und Sulfo steht; und Y die oben angegebene Bedeutung hat; bedeutet, mit der Massgabe, dass mindestens einer der Reste D und Z einen faserreaktiven Rest -SO₂-Y oder -NHCO-Y₁ trägt, worin Y und Y₁ die oben genannten Bedeutungen haben.

2. Verbindungen der Formel 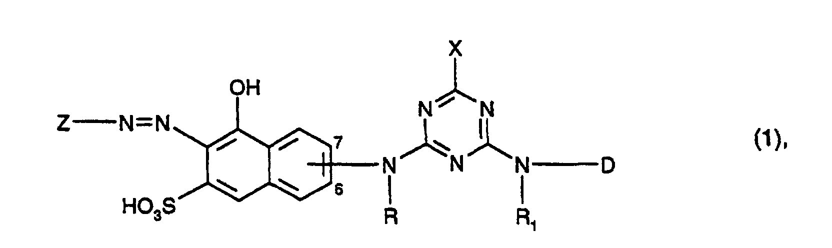 worin
R gegebenenfalls substituiertes C₁-C₄-Alkyl bedeutet,
R₁ Wasserstoff ist,
X für Halogen steht,
Z ein Rest der Formel 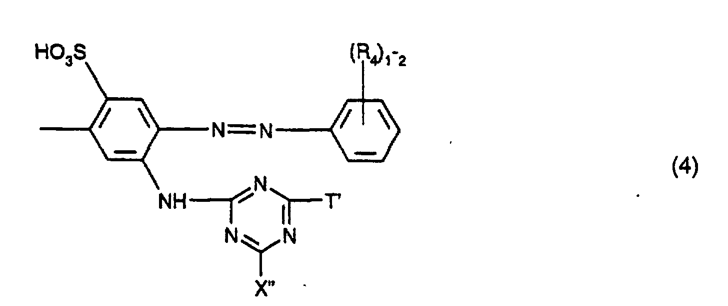 ist, worin
T' einen nicht-reaktiven Aminorest bedeutet,
X" unabhängig die für X angegebene Bedeutung hat, und
(R₄)₁₋₂ für 1 bis 2 gleiche oder verschiedene Reste R₄ aus der Gruppe Methyl, Methoxy, Sulfo und Reaktivrest der Formel
-SO₂-Y (2a),
-CONH-(CH₂)ₙ-SO₂-Y (2b)
oder
-NH-CO-Y₁ (2d)
steht, worin
Y Vinyl, β-Chlorethyl, β-Sulfatoethyl, β-Thiosulfatoethyl, β-Acetoxyethyl, β-Phenoxyethyl oder β-Phosphatoethyl,
Y₁ eine Gruppe -CHX₁-CH₂X₁ oder -CX₁=CH₂ und X₁ Brom oder Chlor, und
n eine ganze Zahl von 1 bis 6 sind, und
D der Rest eines Monoazo-, Polyazo-, Metallkomplexazo-, Anthrachinon-, Phthalocyanin-, Formazan- oder Dioxazin-Chromophors bedeutet,
mit den Massgaben, dass (i) mindestens einer der Reste D und Z einen faserreaktiven Rest -SO₂-Y oder -NHCO-Y₁ trägt, worin Y und Y₁ die oben angegebenen Bedeutungen haben, und dass (ii) der Rest -NR₁- nicht an einen durch -NH₂ substituierten Phenylenrest gebunden ist, wenn D für den Rest eines Monoazo- oder Disazochromophors steht.

3. Verbindungen gemäss Anspruch 1 oder 2, **dadurch gekennzeichnet, dass**
R C₁-C₄-Alkyl, besonders Methyl, bedeutet.

4. Verbindungen gemäss Anspruch 1 oder 2, **dadurch gekennzeichnet, dass**
X Fluor oder Chlor bedeutet.

5. Verbindungen gemäss Anspruch 1, **dadurch gekennzeichnet, dass** Z
(i) unsubstituiertes oder durch Sulfo, Methyl, Methoxy oder einen Reaktivrest -SO₂-Y, worin Y Vinyl oder β-Sulfatoethyl ist, substituiertes Phenyl, oder
(ii) durch 1 bis 3 Sulfogruppen substituiertes 2-Naphthyl bedeutet.

6. Verbindungen gemäss Anspruch 2, **dadurch gekennzeichnet, dass**
D den Rest eines Monoazo-, Disazo- oder Formazan-Chromophors bedeutet.

7. Verbindungen gemäss Anspruch 2 oder 6, **dadurch gekennzeichnet, dass**
D einen Chromophorrest ausgewählt aus der Gruppe 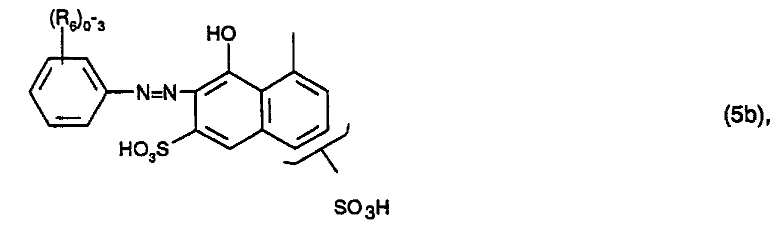 worin (R₆)₀₋₃ für 0 bis 3 gleiche oder verschiedene Substituenten aus der Gruppe C₁-C₄-Alkyl, C₁-C₄-Alkoxy, Halogen, Carboxy, Sulfo und -SO₂-Y steht und Y Vinyl, β-Chlorethyl, β-Sulfatoethyl, β-Thiosulfatoethyl, β-Acetoxyethyl, β-Phenoxyethyl oder β-Phosphatoethyl bedeutet; 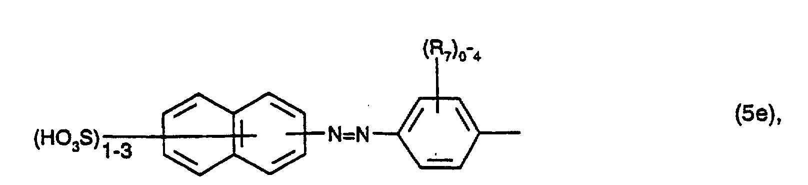 worin (R₇)₀₋₄ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht; 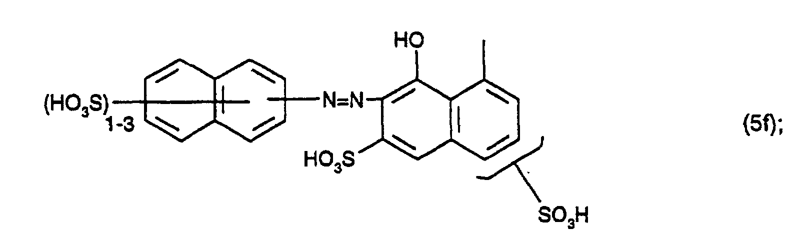 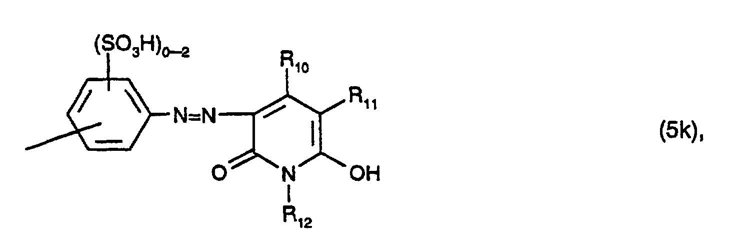 worin R₁₀ und R₁₂ unabhängig voneinander Wasserstoff, C₁-C₄-Alkyl oder Phenyl und R₁₁ Wasserstoff, Cyano, Carbamoyl oder Sulfomethyl sind; 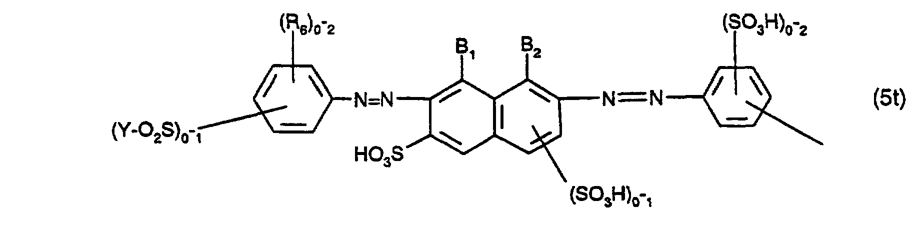 oder 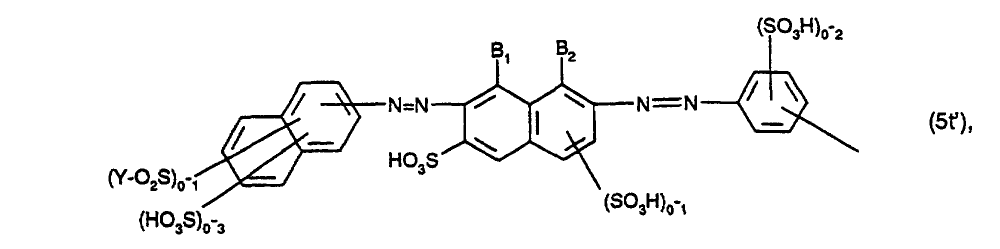 worin (R₆)₀₋₂ für 0 bis 2 gleiche oder verschiedene Substituenten aus der Gruppe C₁-C₄-Alkyl, C₁-C₄-Alkoxy, Halogen, Carboxy und Sulfo steht, eine der Variablen B₁ und B₂ Hydroxy und die andere Amino bedeutet und Y die oben angegebene Bedeutung hat; oder 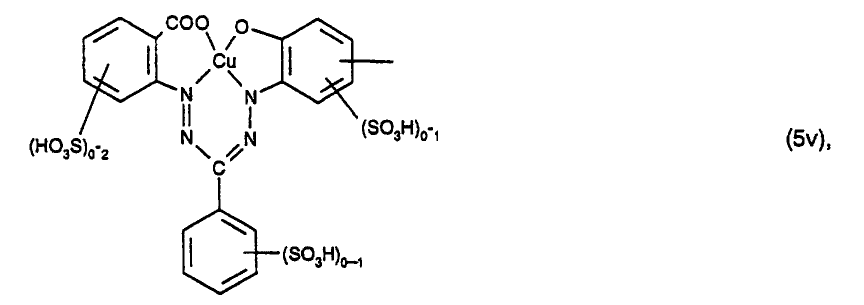 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind; bedeutet.

8. Verbindungen gemäss einem der Ansprüche 2, 6 und 7, **dadurch gekennzeichnet, dass** D ein Chromophorrest aus der Gruppe 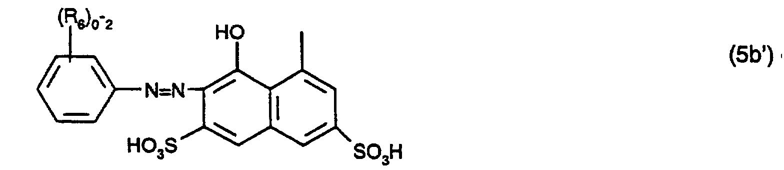 oder 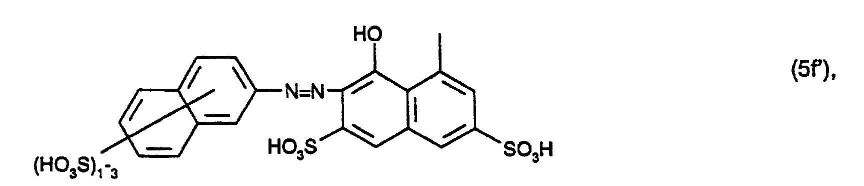 worin (R₆)₀₋₂ für 0 bis 2 gleiche oder verschiedene Substituenten aus der Gruppe Methyl, Methoxy, Sulfo, -SO₂-CH=CH₂ und -SO₂-CH₂CH₂-OSO₃H steht; 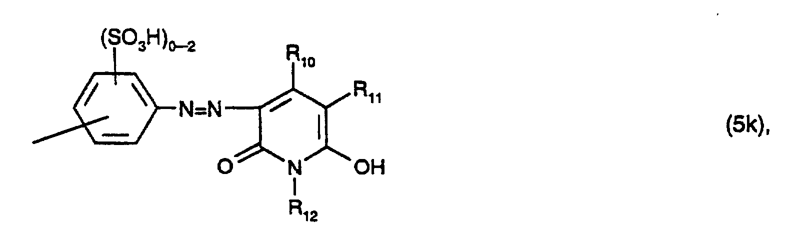 worin R₁₀ und R₁₂ unabhängig voneinander je C₁-C₄-Alkyl und R₁₁ Cyano, Carbamoyl oder Sulfomethyl sind; 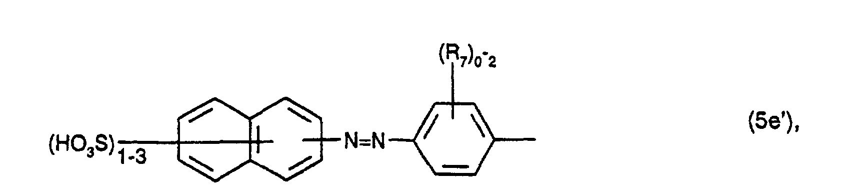 worin (R₇)₀₋₂ für 0 bis 2 gleiche oder verschiedene Substituenten aus der Gruppe C₁-C₄-Alkyl, C₁-C₄-Alkoxy, Acetylamino, Ureido und Sulfo steht; 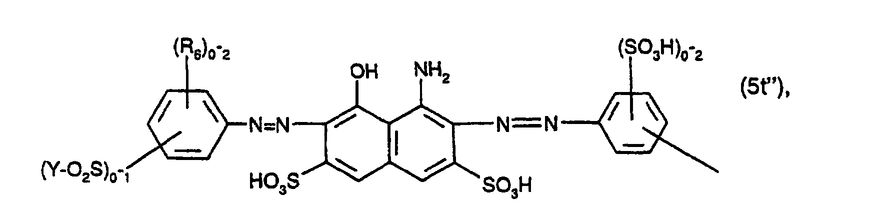 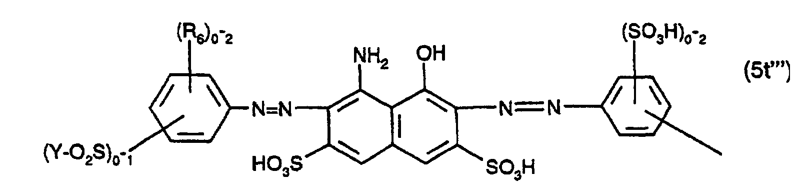 oder 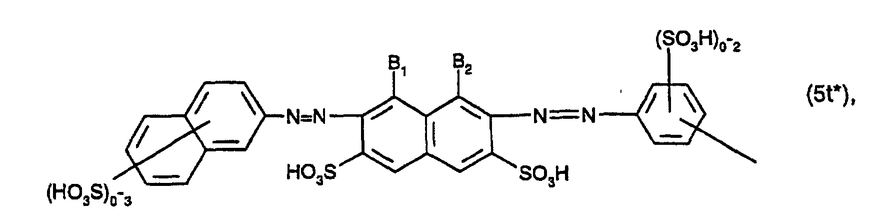 worin (R₆)₀₋₂ für 0 bis 2 gleiche oder verschiedene Substituenten aus der Gruppe Methyl, Methoxy und Sulfo steht, eine der Variablen B₁ und B₂ Hydroxy und die andere Amino bedeutet und Y Vinyl oder β-Sulfatoethyl ist; oder 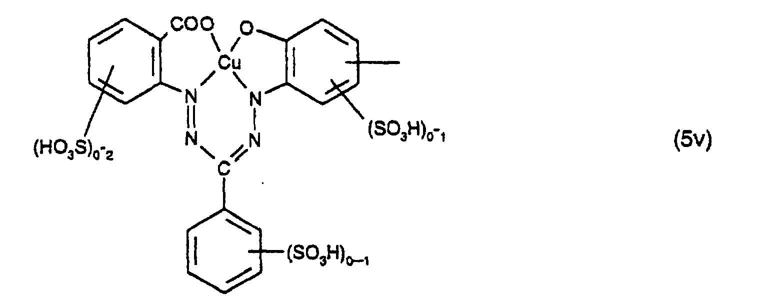 ist.

9. Verfahren zur Herstellung von Verbindungen der Formel (1) gemäss Anspruch 1 oder 2, **dadurch gekennzeichnet, dass** man ein Moläquivalent einer Verbindung der Formel
Z-NH₂ (6)
diazotiert und auf ein Moläquivalent einer Verbindung der Formel 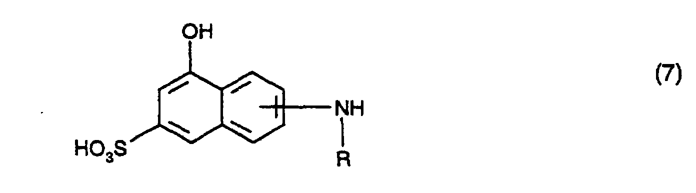 kuppelt und das Produkt mit je einem Moläquivalent einer Verbindung der Formel 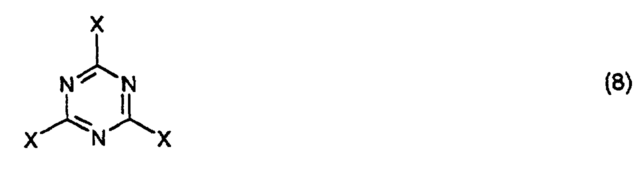 und
D-NHR₁ (9)
kondensiert;
oder ein Motäquivalent einer Verbindung der Formel (6) diazotiert und auf ein Moläquivalent eines Kondensationsprodukts aus je einem Moläquivalent einer Verbindung der Formel (7) und (8) kuppelt und das erhaltene Produkt mit einem Moläquivalent einer Verbindung der Formel (9) kondensiert;
oder ein Moläquivalent einer Verbindung der Formel (6) diazotiert und auf ein Moläquivalent eines Kondensationsprodukts aus je einem Moläquivalent einer Verbindung der Formel (7), (8) und (9) kuppelt;
oder zwei Moläquivalente einer Verbindung der Formel (6) diazotiert und auf ein Moläquivalent eines Kondensationsprodukts aus je einem Moläquivalent einer Verbindung der Formel (7) und (8) und einer Vorstufe der Verbindung der Formel (9) kuppelt; wobei D, R, R₁, X und Z jeweils die im Anspruch 1 oder 2 angegebene Bedeutung haben.

10. Verwendung von Verbindungen der Formel (1) gemäss Anspruch 1 oder 2 zum Färben oder Bedrucken von hydroxylgruppenhaltigen oder stickstoffhaltigen Fasermaterialien.

11. Verwendung gemäss Anspruch 10 zum Färben oder Bedrucken von cellulosehaltigen Fasermaterialien, insbesondere von baumwollhaltigen Fasermaterialien.

## Claims

1. A compound of the formula 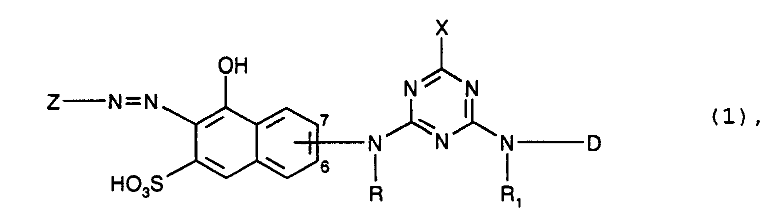 in which
R is substituted or unsubstituted C₁-C₄alkyl,
R₁ is hydrogen,
X is halogen,
Z is phenyl which is substituted by one or more identical or different substituents from the group consisting of sulfo, C₁-C₄alkyl, C₁-C₄alkoxy and reactive radicals of the formulae
-SO₂-Y (2a),
-CONH-(CH₂)ₙ-SO₂-Y (2b)
or
-NH-CO-Y₁ (2d)
in which
Y is vinyl, β-chloroethyl, β-sulfatoethyl, β-thiosulfatoethyl, β-acetoxyethyl, β-phenoxyethyl or β-phosphatoethyl,
Y₁ is a group -CHX₁-CH₂X₁ or -CX₁=CH₂ and X₁ is bromine or chlorine, and
n is an integer from 1 to 6, or
Z is 1- or 2-naphthyl substituted by sulfo or by a reactive radical of the formula (2a) indicated above;
and D is a radical of the formula 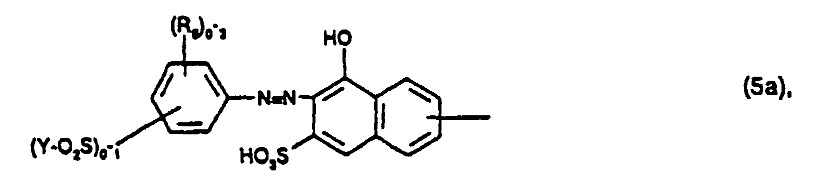 in which (R₆)₀₋₃ is 0 to 3 identical or different substituents from the group consisting of C₁-C₄alkyl, C₁-C₄alkoxy, halogen, carboxyl and sulfo and Y is as defined above; 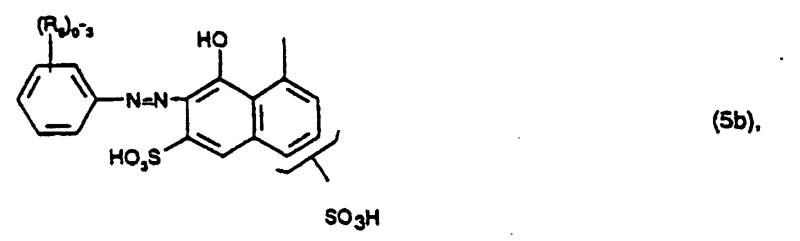 in which (R₆)₀₋₃ is as defined above or is a radical of the formula -SO₂-Y, Y being as defined above; 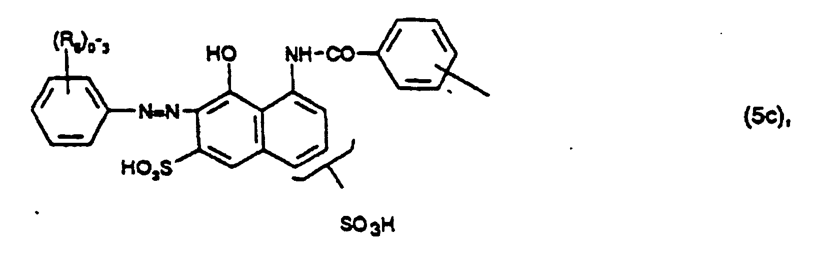 in which (R₆)₀₋₃ is as defined above, 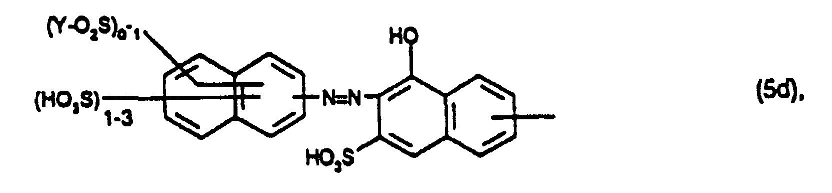 in which Y is as defined above; 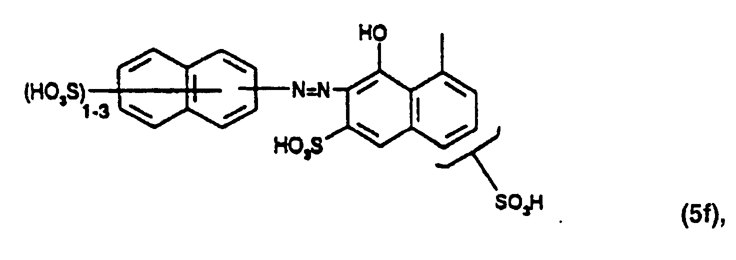 or 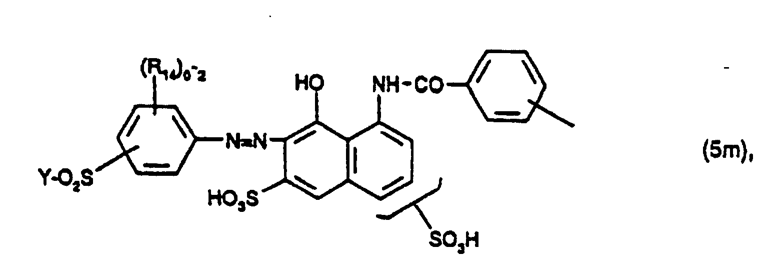 in which
(R₁₄)₀₋₂ is 0 to 2 identical or different substituents from the group consisting of C₁-C₄alkyl, C₁-C₄alkoxy, halogen, carboxyl and sulfo; and Y is as defined above; with the proviso that at least one of the radicals D and Z carries a fibre-reactive radical -SO₂-Y or - NHCO-Y₁, in which Y and Y₁ are as defined above.

2. A compound of the formula 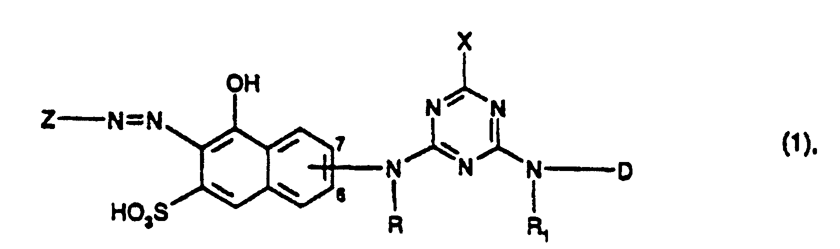 in which
R is unsubstituted or substituted C₁-C₄alkyl,
R₁ is hydrogen,
X is halogen,
Z is a radical of the formula 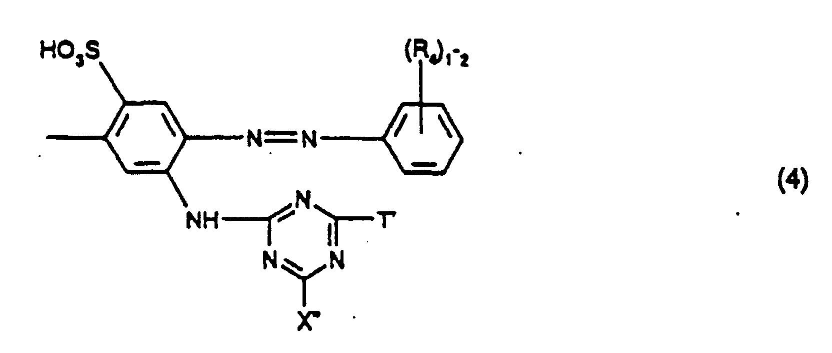 in which
T' is a non-reactive amino radical,
X" is independently as defined for X, and
(R₄)₁₋₂ is 1 or 2 identical or different radicals R₄ from the group consisting of methyl, methoxy, sulfo and reactive radical of the formula
-SO₂-Y (2a),
-CONH-(CH₂)ₙ-SO₂-Y (2b)
or
-NH-CO-Y₁ (2d)
in which
Y is vinyl, β-chloroethyl, β-sulfatoethyl, β-thiosulfatoethyl, β-acetoxyethyl, β-phenoxyethyl or β-phosphatoethyl,
Y₁ is a group -CHX₁-CH₂X₁ or -CX₁=CH₂ and X₁ is bromine or chlorine, and
n is an integer from 1 to 6, and
D is the radical of a monoazo, polyazo, metal complex azo, anthraquinone, phthalocyanine, formazan or dioxazine chromophore,
with the provisos that (i) at least one of the radicals D and Z carries a fibre-reactive radical -SO₂-Y or -NHCO-Y₁, in which Y and Y₁ are as defined above, and that (ii) the radical -NR₁- is not bonded to a phenylene radical substituted by -NH₂ if D is the radical of a monoazo or disazo chromophore.

3. A compound according to claim 1 or 2, in which R is C₁-C₄alkyl, in particular methyl.

4. A compound according to claim 1 or 2, in which X is fluorine or chlorine.

5. A compound according to claim 1, in which
Z is (i) phenyl which is unsubstituted or substituted by sulfo, methyl, methoxy or a reactive radical -SO₂-Y, in which
Y is vinyl or β-sulfatoethyl, or
(ii) 2-naphthyl which is substituted by 1 to 3 sulfo groups.

6. A compound according to claim 2, in which
D is the radical of a monoazo, disazo or formazan chromophore.

7. A compound according to claim 2 or 6, in which
D is a chromophore radical chosen from the group consisting of 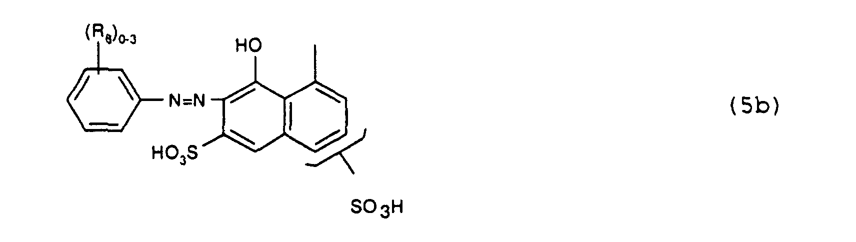 in which (R₆)₀₋₃ is 0 to 3 identical or different substituents from the group consisting of C₁-C₄alkyl, C₁-C₄alkoxy, halogen, carboxyl, sulfo and -SO₂-Y and Y is vinyl, β-chloroethyl, β-sulfatoethyl, β-thiosulfatoethyl, β-acetoxyethyl, β-phenoxyethyl or β-phosphatoethyl; 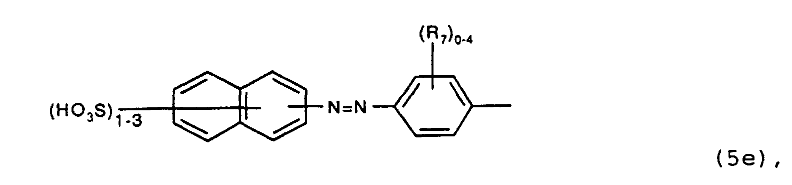 in which (R₇)₀₋₄ is 0 to 4 identical or different substituents from the group consisting of halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo; 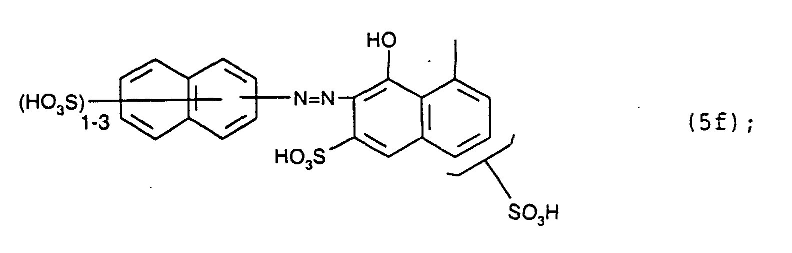 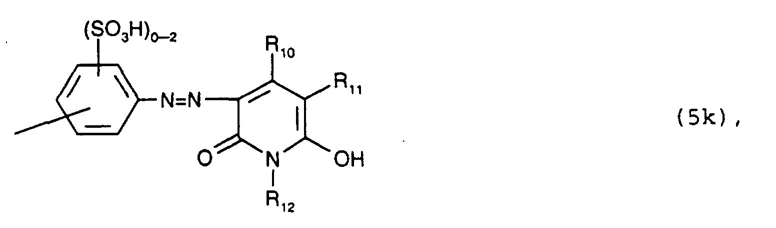 in which R₁₀ and R₁₂ independently of one another are hydrogen, C₁-C₄alkyl or phenyl and
R₁₁ is hydrogen, cyano, carbamoyl or sulfomethyl; 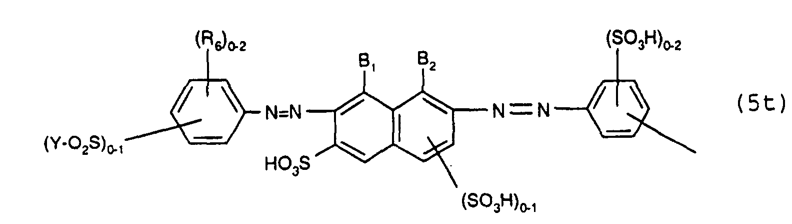 or 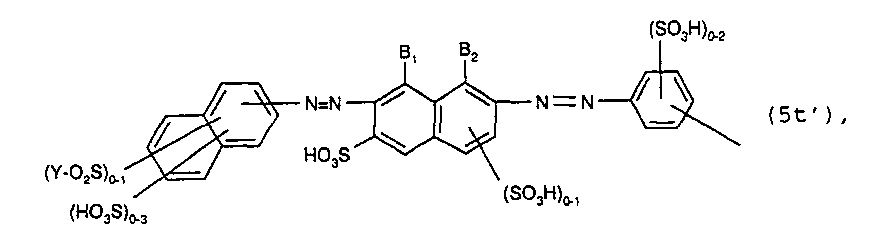 in which (R₆)₀₋₂ is 0 to 2 identical or different substituents from the group consisting of C₁-C₄alkyl, C₁-C₄alkoxy, halogen, carboxyl and sulfo,
one of the variables B₁ and B₂ is hydroxyl and the other is amino and
Y is as defined above; or 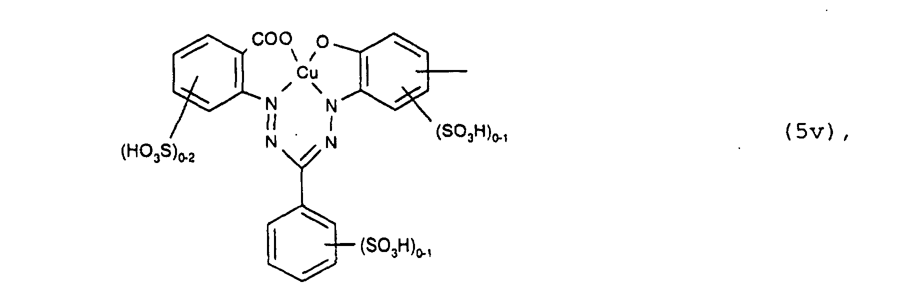 in which the benzene rings contain no further substituents or are further substituted by C₁-C₄alkyl, C₁-C₄alkoxy, C₁-C₄alkylsulfonyl, halogen or carboxyl.

8. A compound as claimed in any one of claims 2, 6 and 7, in which
D is a chromophore radical from the group consisting of 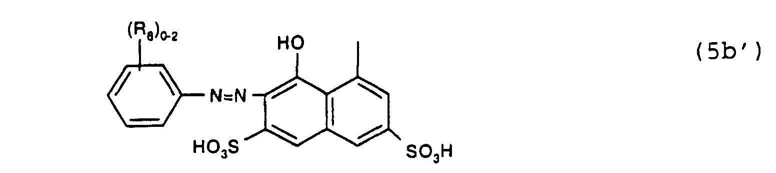 or 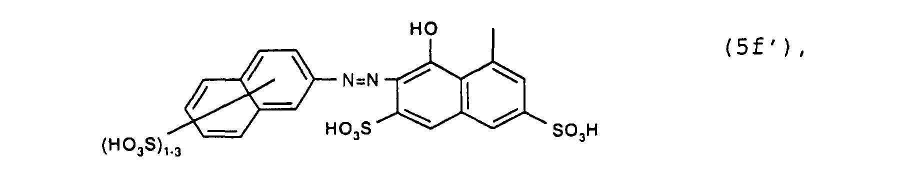 in which (R₆)₀₋₂ is 0 to 2 identical or different substituents from the group consisting of methyl, methoxy, sulfo, -SO₂-CH=CH₂ and -SO₂-CH₂CH₂-OSO₃H; 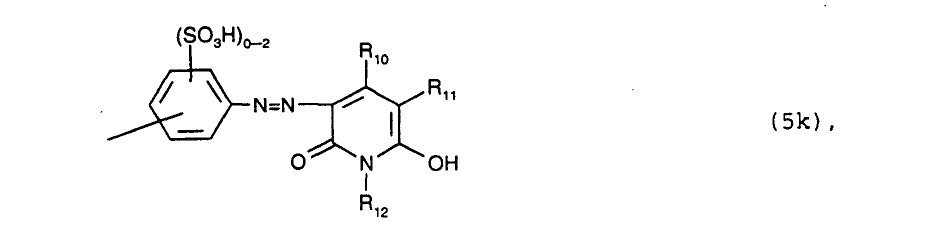 in which R₁₀ and R₁₂ independently of one another are each C₁-C₄alkyl and R₁₁ is cyano, carbamoyl or sulfomethyl; 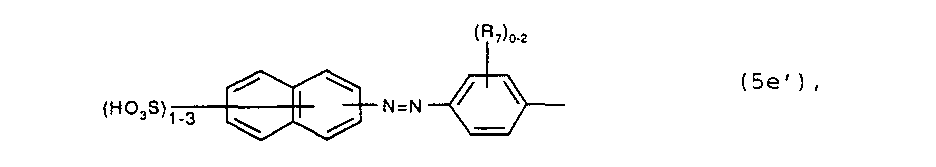 in which (R₇)₀₋₂ is 0 to 2 identical or different substituents from the group consisting of C₁-C₄alkyl, C₁-C₄alkoxy, acetylamino, ureido and sulfo; 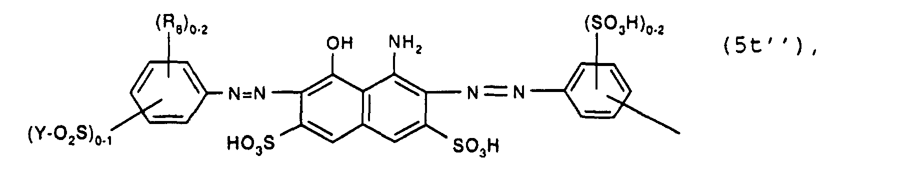 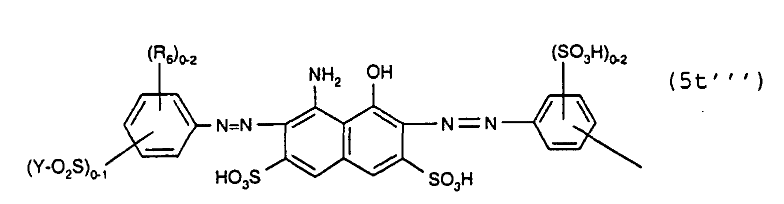 or 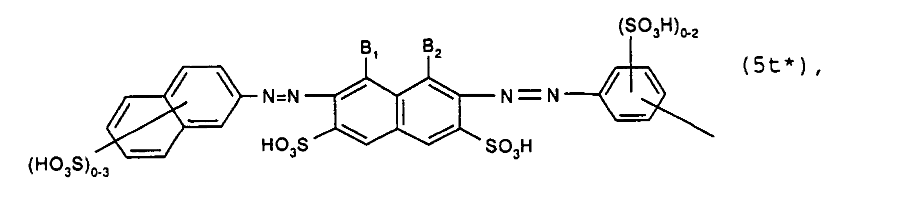 in which (R₆)₀₋₂ is 0 to 2 identical or different substituents from the group consisting of methyl, methoxy and sulfo,
one of the variables B₁ and B₂ is hydroxyl and the other is amino and
Y is vinyl or β-sulfatoethyl; or

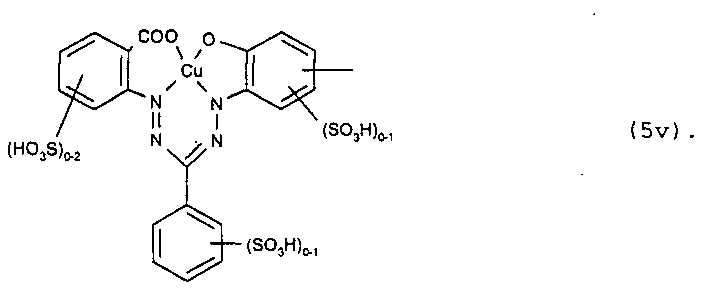

9. A process for the preparation of a compound of the formula (1) according to claim 1 or 2, which comprises diazotizing one molar equivalent of a compound of the formula
Z - NH₂ (6),
and coupling it to one molar equivalent of a compound of the formula 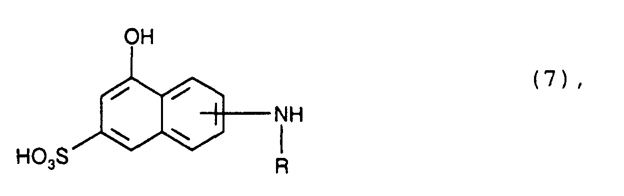 and condensing the product with in each case one molar equivalent of a compound of the formula 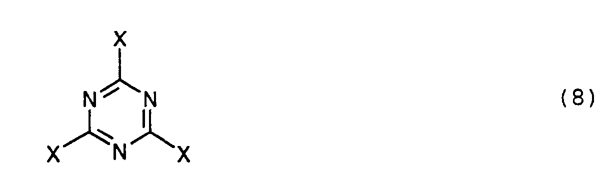 and
D-NHR₁ (9),
or diazotizing one molar equivalent of a compound of the formula (6) and coupling it to one molar equivalent of a condensation product of one molar equivalent each of a compound of the formula (7) and (8) and condensing the resultant product with one molar equivalent of a compound of the formula (9);
or diazotizing one molar equivalent of a compound of the formula (6) and coupling it to one molar equivalent of a condensation product of one molar equivalent each of a compound of the formula (7), (8) and (9);
or diazotizing two molar equivalents of a compound of the formula (6) and coupling the product to one molar equivalent of a condensation product of one molar equivalent each of a compound of the formula (7) and (8) and of a precursor of the compound of the formula (9) ; in which D, R, R₁, X and Z are each as defined in claim 1 or 2.

10. The use of a compound of the formula (1) according to claim 1 or 2 for dyeing or printing a fibre material containing hydroxyl groups or containing nitrogen.

11. The use according to claim 10 for dyeing or printing a cellulosic fibre material, in particular a fibre material containing cotton.

## Revendications

1. Composés de formule 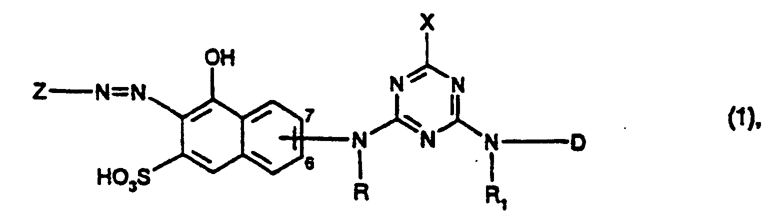 dans laquelle
R représente un groupe alkyle en C₁ à C₄ éventuellement substitué,
R₁ est un atome d'hydrogène,
X représente un atome d'halogène,
Z représente un groupe phényle substitué par un ou plusieurs substituants identiques ou différents choisis parmi un groupe sulfo, alkyle en C₁ à C₄, alcoxy en C₁ à C₄ et un résidu réactif de formule
-SO₂-Y (2a),
-CONH-(CH₂)ₙ-SO₂-Y (2b),
ou
-NH-CO-Y₁ (2d),
dans lesquelles,
Y représente un groupe vinyle, β-chloroéthyle, β-sulfatoéthyle, β-thiosulfatoéthyle, β-acétoxyéthyle, β-phénoxyéthyle ou β-phosphatoéthyle,
Y₁ représente un groupe -CHX₁-CH₂X₁ ou -CX₁=CH₂ et X₁ un atome de brome ou de chlore, et
n est un nombre entier de 1 à 6, ou
Z représente un groupe 1- ou 2-naphtyle substitué par un groupe sulfo ou un groupe réactif de formule (2a) indiquée ci-dessus ;
et D est un groupe de formule 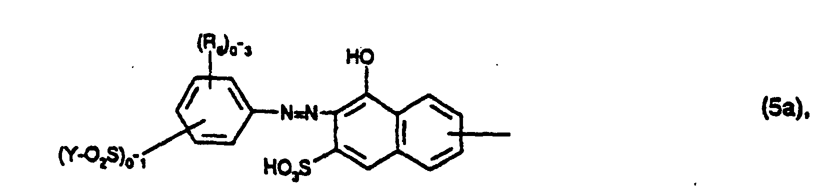 dans laquelle (R₆)₀₋₃ représente de 0 à 3 substituants identiques ou différents choisis parmi un groupe alkyle en C₁ à C₄, alcoxy en C₁ à C₄, un atome d'halogène, un groupe carboxy et sulfo et Y a la signification indiquée ci-dessus ; 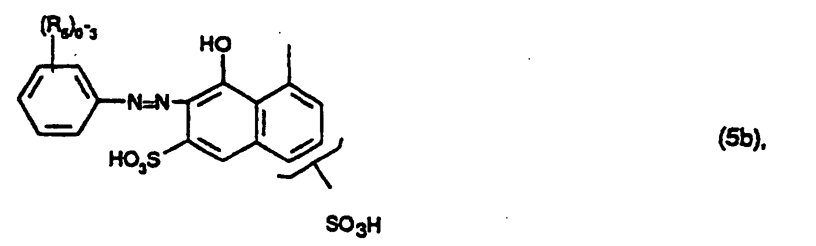 dans laquelle (R₆)₀₋₃ a la signification indiquée précédemment ou est un groupe de formule -SO₂-Y, dans laquelle les significations indiquées précédemment pour Y sont valables ; 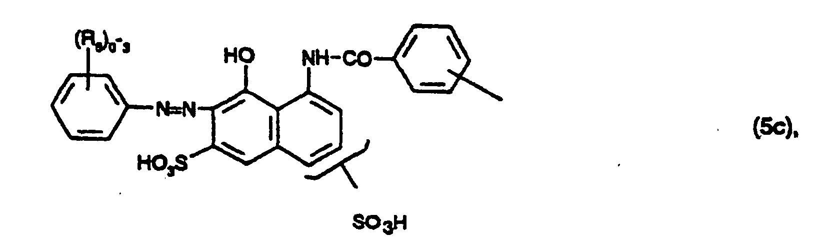 dans laquelle (R₆)₀₋₃ a la signification indiquée précédemment, 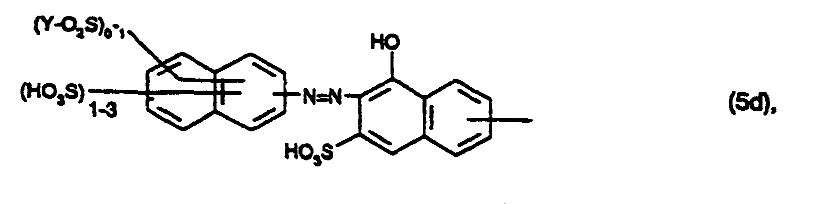 dans laquelle Y a la signification indiquée précédemment ; 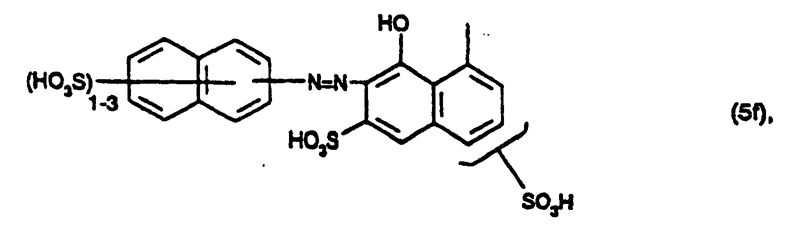 ou 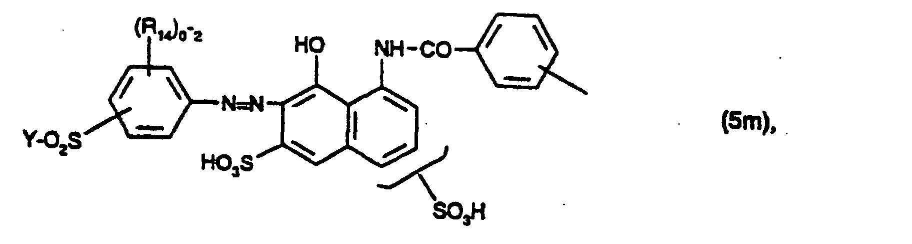 dans laquelle
(R₁₄)₀₋₂ représente de 0 à 2 substituants identiques ou différents choisis parmi un groupe alkyle en C₁ à C₄, alcoxy en C₁ à C₄, un atome d'halogène, un groupe carboxy et sulfo ; et Y a la signification susmentionnée ; avec la condition qu'au moins l'un des restes D et Z porte un groupe réactif des fibres -SO₂-Y ou -NHCO-Y-, dans lesquelles Y et Y₁ ont les significations susmentionnées ;

2. Composés de formule 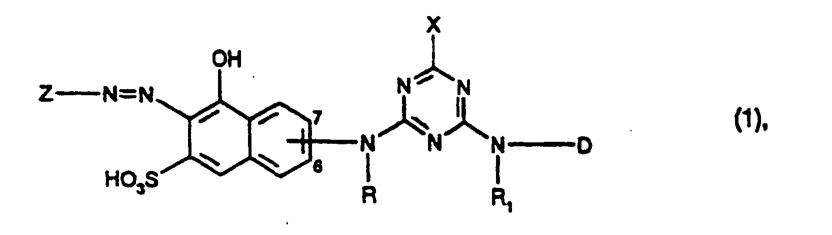 dans laquelle
R représente un groupe alkyle en C₁ à C₄ éventuellement substitué,
R₁ est un atome d'hydrogène,
X représente un atome d'halogène,
Z est un groupe de formule 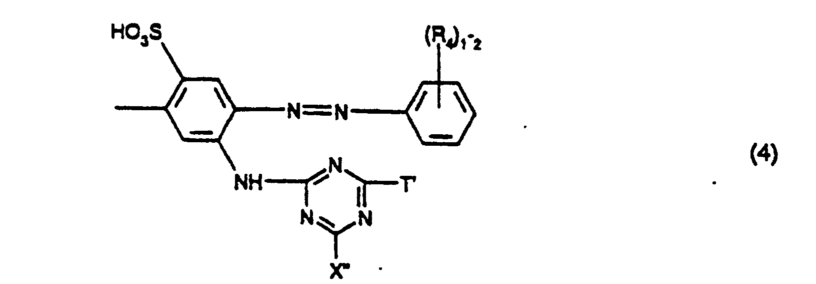 dans laquelle
T' représente un groupe amino non réactif,
X" a indépendamment la signification indiquée pour X, et (R₄)₁₋₂ représente de 1 à 2 groupes R₄ identiques ou différents choisis parmi les groupes méthyle, méthoxy, sulfo et un groupe réactif de formule
-SO₂-Y (2a),
-CONH-(CH₂)ₙ-SO₂-Y (2b),
ou
-NH-CO-Y₁ (2d),
dans lesquelles,
Y représente un groupe vinyle, β-chloroéthyle, β-sulfatoéthyle, β-thiosulfatoéthyle, β-acétoxyéthyle, β-phénoxyéthyle ou β-phosphatoéthyle,
Y₁ représente un groupe -CHX₁-CH₂X₁ ou -CX₁=CH₂ et X₁ un atome de brome ou de chlore, et
n est un nombre entier de 1 à 6, ou
et D représente le résidu d'un chromophore monoazoïque, polyazoïque, de métal azoïque complexe, anthraquinone, phtalocyanine, formazan ou dioxazine,
avec la condition que (i) au moins l'un des restes D et Z porte un groupe réactif des fibres -SO₂-Y ou -NHCO-Y-, dans lesquelles Y et Y₁ ont les significations susmentionnées, et que (ii) le groupe -NR₁- ne soit pas lié à un groupe phényle substitué par -NH₂, lorsque D représente un résidu d'un monoazo- ou disazochromophore.

3. Composés selon la revendication 1 ou 2, **caractérisés en ce que** R représente un groupe alkyle en C₁ à C₄, en particulier méthyle.

4. Composés selon la revendication 1 ou 2, **caractérisés en ce que** X représente le fluor ou le chlore.

5. Composés selon la revendication 1, **caractérisés en ce que** Z représente
(i) un groupe phényle non substitué ou substitué par un groupe sulfo, méthyle, méthoxy ou un groupe réactif -SO₂-Y, dans lequel Y est un groupe vinyle ou β-sulfatoéthyle, ou
(ii) un groupe 2-naphtyle substitué par 1 à 3 groupes sulfo.

6. Composés selon la revendication 2, **caractérisés en ce que** D représente le résidu d'un chromophore monoazoïque, disazoïque ou formazan.

7. Composés selon la revendication 2 ou 6, **caractérisés en ce que**
D représente un résidu de chromophore choisi parmi 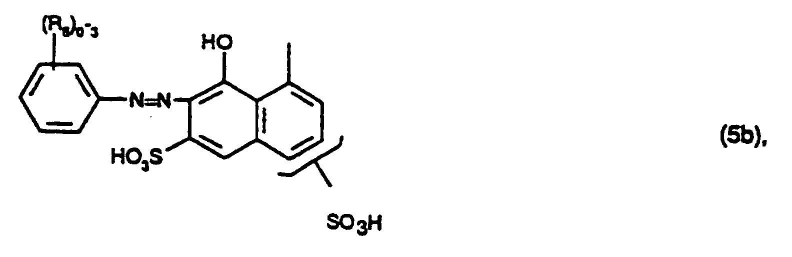 dans laquelle (R₆)₀₋₃ représente de 0 à 3 substituants identiques ou différents choisis parmi un groupe alkyle en C₁ à C₄, alcoxy en C₁ à C₄,, un atome d'halogène, un groupe carboxy, sulfo et -SO₂-Y et Y représente un groupe vinyle, β-chloroéthyle, β-sulfatoéthyle, β-thiosulfatoéthyle, β-acétoxyéthyle, β-phénoxyéthyle ou β-phosphatoéthyle; 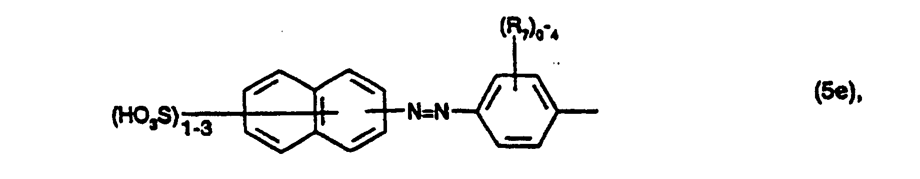 dans laquelle (R₇)₀₋₄ représente de 0 à 4 substituants identiques ou différents choisis parmi un atome d'halogène, un groupe nitro, cyano, trifluorométhyle, sulfamoyle, carbamoyle, alkyle en C₁ à C₄, alcoxy en C₁ à C₄, amino, acétylamino, uréido, carboxy, sulfométhyle et sulfo ; 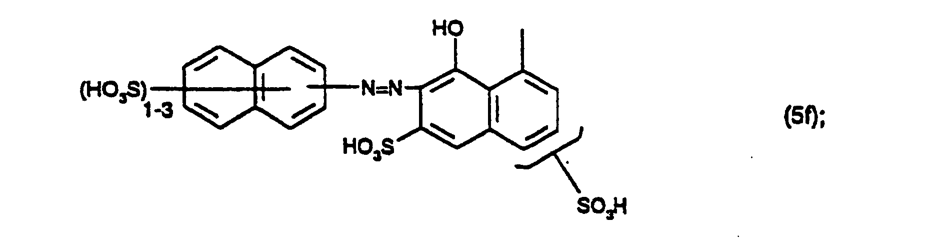 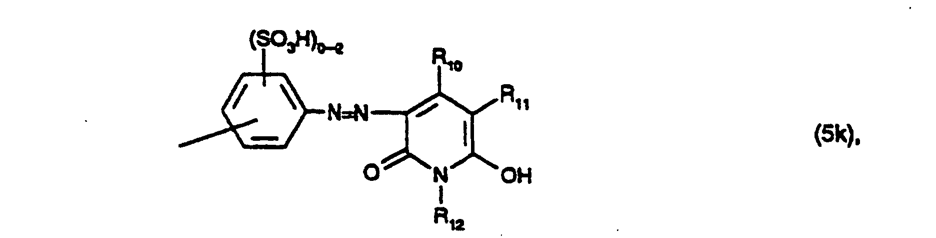 dans laquelle R₁₀ et R₁₂ sont indépendamment l'un de l'autre un atome d'hydrogène, un groupe alkyle en C₁ à C₄ ou phényle et R₁₁ est un atome d'hydrogène, un groupe cyano, carbamoyle ou sulfométhyle ; 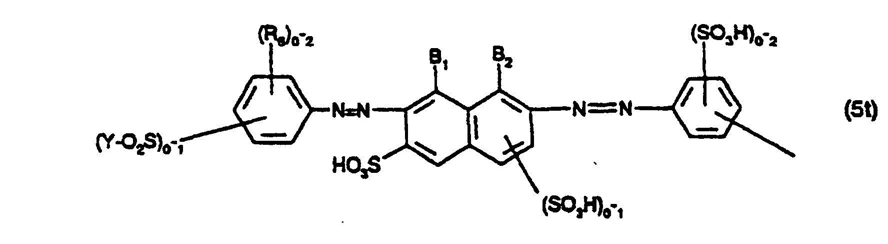 ou 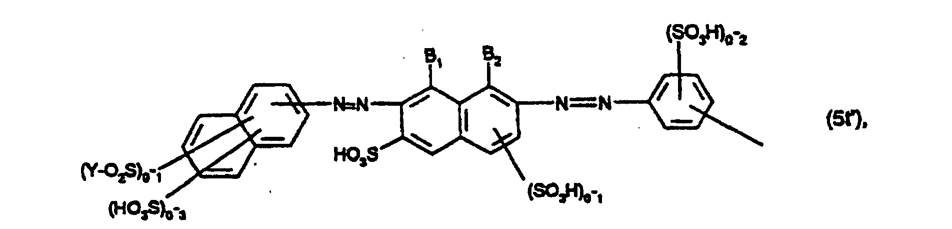 dans lesquelles (R₆)₀₋₂ représente de 0 à 2 substituants identiques ou différents choisis parmi un groupe alkyle en C₁ à C₄, alcoxy en C₁ à C₄, un atome d'halogène, un groupe carboxy ou sulfo, l'une des variables B₁ et B₂ représente un groupe hydroxy et l'autre un groupe amino
et Y a la signification indiquée ci-dessus ; ou 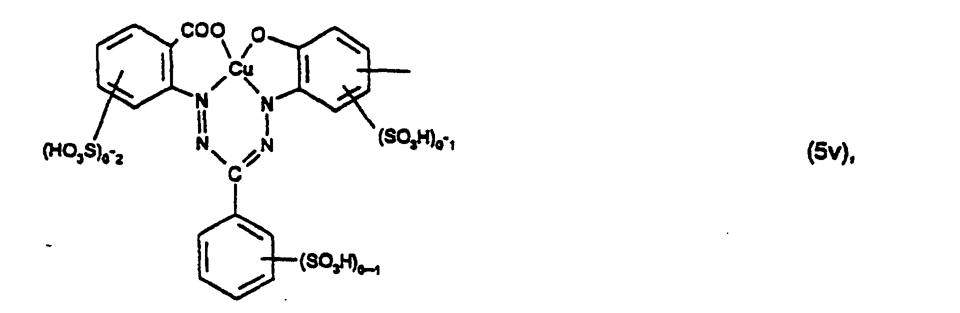 dans lesquelles les noyaux benzéniques ne contiennent pas d'autres substituants ou sont encore substitués par un groupe alkyle en C₁ à C₄, alcoxy en C₁ à C₄, alkylsulfonyle en C₁ à C₄, un atome d'halogène ou un groupe carboxy ;

8. Composés selon l'une des revendications 2, 6 et 7, **caractérisés en ce que** D représente un chromophore du groupe 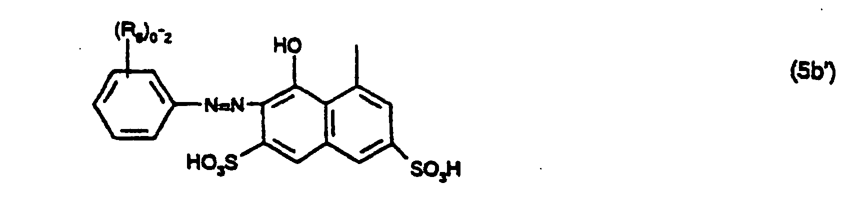 ou 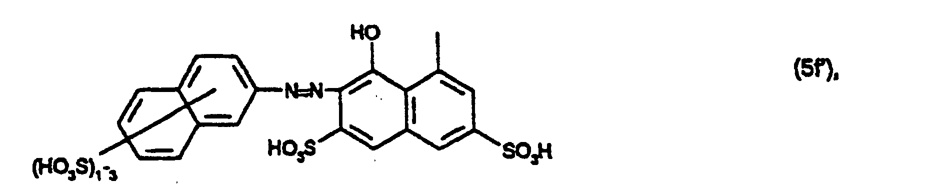 dans lesquelles (R₆)₀₋₂ représente de 0 à 2 substituants identiques ou différents choisis parmi les groupes méthyle, méthoxy, sulfo, -SO₂-CH=CH₂ et -SO₂-CH₂CH₂-OSO₃H ; 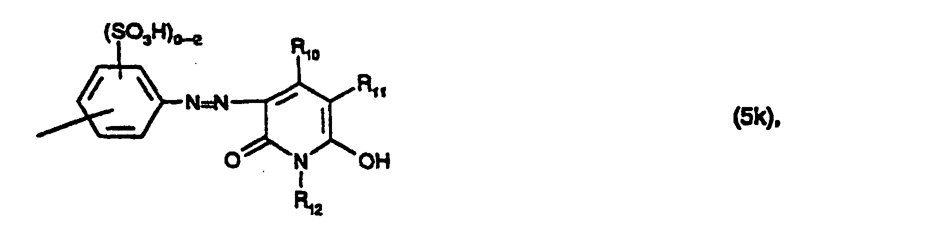 dans laquelle R₁₀ et R₁₂ sont indépendamment l'une de l'autre respectivement un groupe alkyle en C₁ à C₄ et R₁₁ un groupe cyano, carbamoyle ou sulfométhyle ; 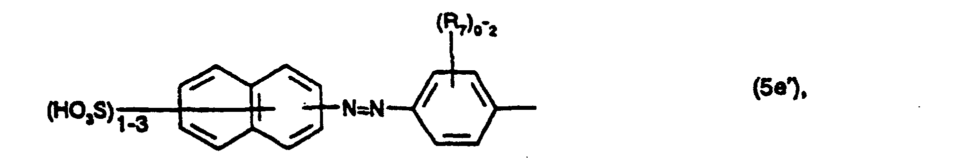 dans laquelle (R₇)₀₋₂ représente de 0 à 2 substituants identiques ou différents choisis parmi un groupe alkyle en C₁ à C₄, alcoxy en C₁ à C₄, acétylamino, uréido et sulfo ; 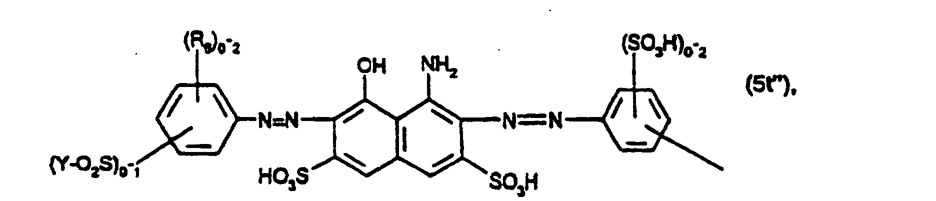 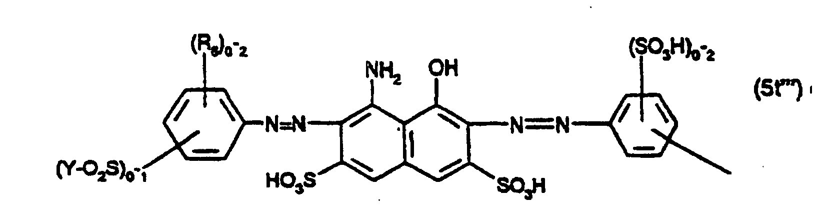 ou 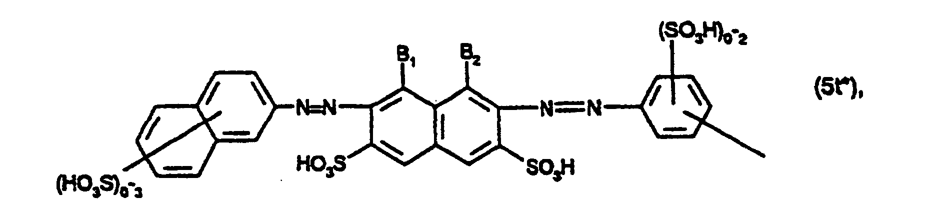 dans lesquelles (R₆)₀₋₂ représentent de 0 à 2 substituants identiques ou différents choisis parmi les groupes méthyle, méthoxy et sulfo, une des variables B₁ et B₂ représente un groupe hydroxy et l'autre un groupe amino et Y est un groupe vinyle ou β-sulfatoéthyle ; ou

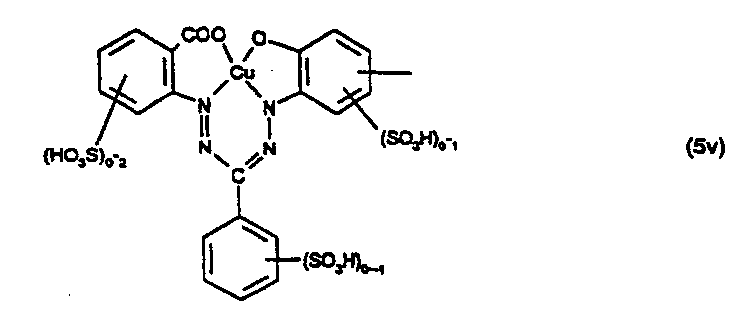

9. Procédé pour la préparation de composés de formule (1) selon la revendication 1 ou 2, **caractérisé en ce que**, l'on réalise la diazotation d'un équivalent en mole d'un composé de formule
Z-NH₂ (6),
et la copulation sur un équivalent molaire d'un composé de formule 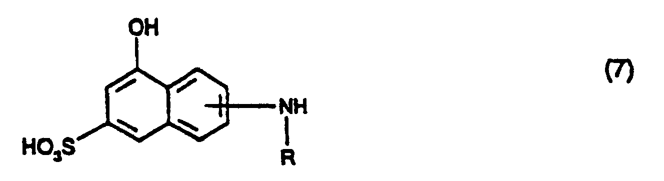 et la condensation du produit avec respectivement un équivalent molaire d'un composé de formule 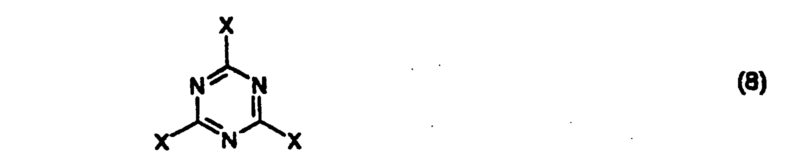 et
D-NHR₁ (9);
ou **en ce qu'**on réalise la diazotation d'un équivalent molaire d'un composé de formule (6) et la copulation d'un équivalent molaire d'un produit de condensation de respectivement un équivalent molaire d'un composé de formule (7) et (8) et la condensation du produit obtenu avec un équivalent molaire d'un composé de formule (9) ;
ou la diazotation d'un équivalent molaire d'un composé de formule (6) et la copulation sur un équivalent molaire d'un produit de condensation de respectivement un équivalent molaire d'un composé de formule (7), (8) et (9) ;
ou la diazotation de deux équivalents molaires d'un composé de formule (6) et la copulation sur un équivalent molaire d'un produit de condensation de respectivement un équivalent molaire d'un composé de formule (7) et (8) et d'un précurseur du composé de formule (9) ;
formules dans lesquelles D, R, R₁, X et Z ont respectivement la signification indiquée dans la revendication 1 ou 2.

10. Utilisation de composés de formule (1) selon la revendication 1 pour la teinture ou l'impression de matériaux fibreux contenant des groupes hydroxyle ou contenant de l'azote.

11. Utilisation selon la revendication 10 pour la coloration ou l'impression de matériaux fibreux cellulosiques, en particulier de matériaux fibreux contenant du coton.
